# EUROPEAN PATENT APPLICATION

(11) **EP 4 700 264 A1**
(43) Date of publication of application: **25.02.2026**
(21) Application number: 24792383.2
(22) Date of filing: 08.03.2024
(51) Int. Cl.: F16L 39/02, F16L 37/56

(54) **CONNECTION DEVICE**

(30) Priority: 21.04.2023 JP 2023070211
(71) Applicant: SMC Corporation, Tokyo 104-0031 (JP)
(72) Inventor: TAKANASHI Akihito, Ibaraki 300-2493 (JP); KAWAMOTO Takahiro, Ibaraki 300-2493 (JP)
(74) Representative: Keil & Schaafhausen Patentanwälte PartGmbB
(86) International application number: PCT/JP2024/008923
(87) International publication number: WO 2024/219107

(57) **Abstract**

A connection device (10) comprises a first joined body (16A) and a second joined body (16B). The first joined body (16A) has an extension part (22) that extends along an insertion/removal direction (DA) and that is inserted into an insertion hole (30IH) formed in the second joined body (16B). The outer peripheral surface of the extension part 22 has a first step part (22X) and a second step part (22Y). The second step part (22Y) is positioned farther inward than the first step part (22X) between the first step part (22X) and the base end of the extension part (22), the second step part (22Y) engaging with the second joined body (16B). The first step part (22X) engages with the second joined body (16B) after the engagement of the second step part (22Y) is released.

## Description

### TECHNICAL FIELD

The present invention relates to a connection device that serves to connect flow paths.

### BACKGROUND ART

For example, in JP 02-113195 A, there is disclosed a multiple joint having a plurality of tubes in which fluid tubes are connected together and formed integrally together as one body.

### SUMMARY OF THE INVENTION

In the case that the flow paths are connected, it is assumed that the connection will be released due to the pressure of a fluid that flows through the flow paths. Therefore, a measure to safely release the connection is desired.

The present invention has the object of solving the aforementioned problem.

A first aspect of the present invention is characterized by a connection device configured to connect flow paths, comprising a male connector member having a plurality of convexly shaped flow path end parts, a female connector member having concavely shaped flow path end parts that are disposed to be capable of fitting one-to-one with the plurality of convexly shaped flow path end parts, a first joined body disposed on one of the male connector member and the female connector member, and a second joined body disposed on another of the male connector member and the female connector member, wherein a through hole is formed in the second joined body to penetrate through the second joined body along a direction of insertion and removal in which the convexly shaped flow path end parts and the concavely shaped flow path end parts are inserted and removed, and the first joined body comprises an insertion member a distal end part of which is inserted into the through hole, in a fitted state in which the convexly shaped flow path end parts and the concavely shaped flow path end parts are fitted together, a base member, a tubular shaped member disposed on the base member, and configured to extend in a direction of removal opposite to a direction of insertion in which the insertion member is inserted into the through hole, to cover an outer periphery of a proximal end part of the insertion member, and to support the insertion member, a first biasing member configured to bias the insertion member in the direction of removal with respect to the tubular shaped member, a first locking member disposed on the insertion member, and which, in the fitted state, is configured to lock with a first opening edge part positioned in the direction of insertion from among opening edge parts that are defined by the through hole on both sides of the second joined body, thereby restricting movement of the first joined body in the direction of removal with respect to the second joined body, and a restricting member positioned more in the direction of removal than the first locking member within the insertion member, and configured to restrict movement of the first joined body in the direction of removal with respect to the second joined body.

A second aspect of the present invention is characterized by a connection device configured to connect flow paths, comprising a male connector member having a plurality of convexly shaped flow path end parts, a female connector member having concavely shaped flow path end parts that are disposed to be capable of fitting one-to-one with the plurality of convexly shaped flow path end parts, a first joined body disposed on one of the male connector member and the female connector member, and a second joined body disposed on another of the male connector member and the female connector member, and the first joined body comprises a first base member, and an extending member configured to extend from the first base member along a direction of insertion and removal in which the convexly shaped flow path end parts and the concavely shaped flow path end parts are inserted and removed, and to be inserted into an insertion hole that is formed in the second joined body, an outer peripheral surface of the extending member includes a first stepped portion, and a second stepped portion positioned between the first stepped portion and a proximal end of the extending member and more on an inner side than the first stepped portion, the second stepped portion, in a fitted state in which the convexly shaped flow path end parts and the concavely shaped flow path end parts are fitted together, engages with the second joined body in order to prevent the extending member that is inserted into the insertion hole from coming out from the insertion hole, and the first stepped portion engages with the second joined body in order to prevent the extending member from coming out from the insertion hole after the engagement with the second stepped portion is released.

According to the present invention, it is possible to safely release the connection.

### BRIEF DESCRIPTION OF DRAWINGS

[FIG. 1] FIG. 1 is a schematic diagram showing a connection device according to a first embodiment at a time of being disconnected;
[FIG. 2] FIG. 2 is a schematic diagram showing the connection device according to the first embodiment at a time of being connected;
[FIG. 3] FIG. 3 is an exploded perspective view showing a second joined body according to the first embodiment;
[FIG. 4] FIG. 4 is a cross-sectional view showing the second joined body according to the first embodiment;
[FIG. 5] FIG. 5 is a cross-sectional view showing a first state of an attachable and detachable structural part according to the first embodiment;
[FIG. 6] FIG. 6 is a cross-sectional view showing a second state of the attachable and detachable structural part according to the first embodiment;
[FIG. 7] FIG. 7 is a cross-sectional view showing a third state of the attachable and detachable structural part according to the first embodiment;
[FIG. 8] FIG. 8 is a cross-sectional view showing a fourth state of the attachable and detachable structural part according to the first embodiment;
[FIG. 9] FIG. 9 is a cross-sectional view showing a fifth state of the attachable and detachable structural part according to the first embodiment;
[FIG. 10] FIG. 10 is a schematic diagram showing a connection device according to a second embodiment at a time of being disconnected;
[FIG. 11] FIG. 11 is a schematic diagram showing a connection device according to the second embodiment at a time of being connected;
[FIG. 12] FIG. 12 is a cross-sectional view showing a first joined body according to the second embodiment;
[FIG. 13] FIG. 13 is a cross-sectional view showing a second joined body according to the second embodiment;
[FIG. 14] FIG. 14 is a perspective view of FIG. 13;
[FIG. 15] FIG. 15 is a front view of an insertion hole according to the second embodiment as viewed from a direction of removal;
[FIG. 16] FIG. 16 is a cross-sectional view showing a first state of an attachable and detachable structural part according to the second embodiment;
[FIG. 17] FIG. 17 is a cross-sectional view showing a second state of the attachable and detachable structural part according to the second embodiment;
[FIG. 18] FIG. 18 is a cross-sectional view showing a third state of the attachable and detachable structural part according to the second embodiment;
[FIG. 19] FIG. 19 is a diagram showing a fourth state of the attachable and detachable structural part according to the second embodiment;
[FIG. 20] FIG. 20 is a schematic diagram showing a connection device according to a third embodiment at a time of being disconnected;
[FIG. 21] FIG. 21 is a schematic diagram showing a connection device according to the third embodiment at a time of being connected;
[FIG. 22] FIG. 22 is an exploded perspective view showing a second joined body according to the third embodiment;
[FIG. 23] FIG. 23 is a cross-sectional view showing an attachable and detachable structural part according to the third embodiment;
[FIG. 24] FIG. 24 is a cross-sectional view showing a first state of the attachable and detachable structural part according to the third embodiment;
[FIG. 25] FIG. 25 is a cross-sectional view showing a second state of the attachable and detachable structural part according to the third embodiment;
[FIG. 26] FIG. 26 is a diagram showing a third state of the attachable and detachable structural part according to the third embodiment;
[FIG. 27] FIG. 27 is a cross-sectional view showing a fourth state of the attachable and detachable structural part according to the third embodiment;
[FIG. 28] FIG. 28 is a schematic diagram showing a connection device according to a fourth embodiment at a time of being disconnected;
[FIG. 29] FIG. 29 is a schematic diagram showing the connection device according to the fourth embodiment at a time of being connected;
[FIG. 30] FIG. 30 is a cross-sectional view of a first joined body and a second joined body;
[FIG. 31] FIG. 31 is a cross-sectional view showing a first state of an attachable and detachable structural part according to the fourth embodiment;
[FIG. 32] FIG. 32 is a cross-sectional view showing a second state of the attachable and detachable structural part according to the fourth embodiment;
[FIG. 33] FIG. 33 is a cross-sectional view showing a third state of the attachable and detachable structural part according to the fourth embodiment; and
[FIG. 34] FIG. 34 is a cross-sectional view showing a fourth state of the attachable and detachable structural part according to the fourth embodiment.

### DETAILED DESCRIPTION OF THE INVENTION

### (First Embodiment)

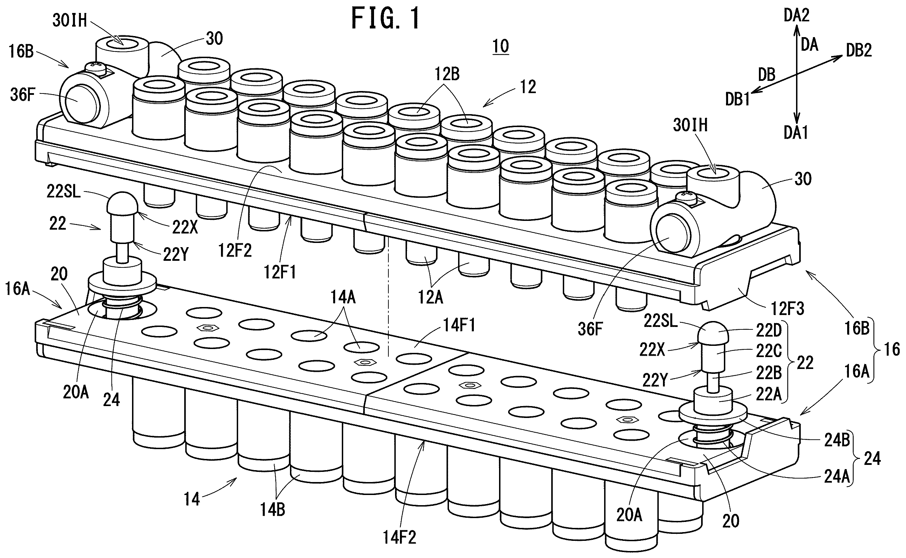

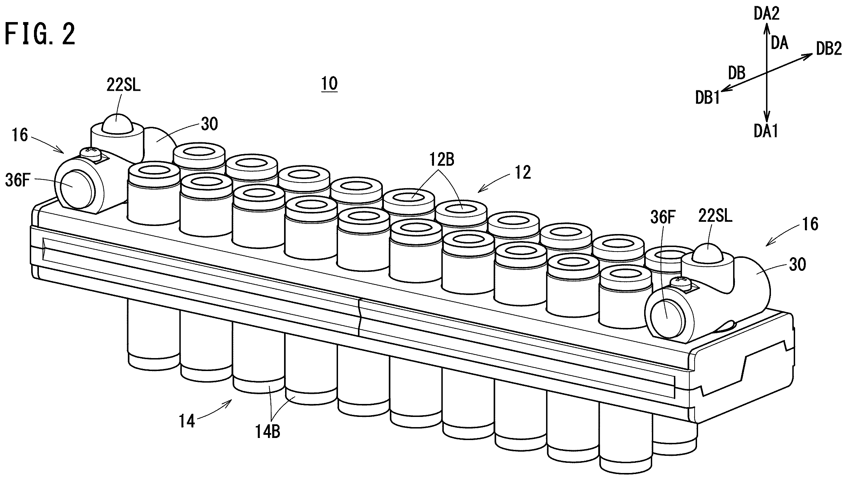

FIG. 1 is a schematic diagram showing a connection device 10 according to a first embodiment at a time of being disconnected. FIG. 2 is a schematic diagram showing the connection device 10 according to the first embodiment at a time of being connected. The connection device 10 is a device that serves to connect flow paths. The connection device 10 includes a male connector member 12, a female connector member 14, and an attachable and detachable structural part 16.

The male connector member 12 is a male connector that is capable of being attached and detached with respect to the female connector member 14. The male connector member 12 is formed, for example, in a rectangular parallelepiped shape. The male connector member 12 includes a plurality of convexly shaped flow path end parts 12A, and a plurality of tube connecting portions 12B.

Each of the plurality of convexly shaped flow path end parts 12A projects out from a first surface 12F1 of the male connector member 12. The first surface 12F1 is a surface that faces toward the female connector member 14 at a time of being attached. The convexly shaped flow path end parts 12A may be output end parts that serve to output the fluid to the female connector member 14, or may be input end parts that serve to input the fluid supplied from the female connector member 14. The plurality of convexly shaped flow path end parts 12A may be divided into at least three groups of columns arranged alongside one another at intervals in one direction. FIG. 1 shows a case in which two groups of columns are arranged on the first surface 12F1.

Each of the plurality of tube connecting portions 12B projects out from a second surface 12F2 of the male connector member 12. The second surface 12F2 is a surface on an opposite side of the first surface 12F1 of the male connector member 12. The plurality of tube connecting portions 12B are provided corresponding to the plurality of convexly shaped flow path end parts 12A. The tube connecting portions 12B communicate with the plurality of convexly shaped flow path end parts 12A. One end of a tube (not shown) is attached to the tube connecting portions 12B.

The female connector member 14 is a female connector that is capable of being attached and detached with respect to the male connector member 12. The female connector member 14 is formed, for example, in a rectangular parallelepiped shape. The female connector member 14 includes the plurality of concavely shaped flow path end parts 14A, and the plurality of tube connecting portions 14B.

The plurality of concavely shaped flow path end parts 14A are provided corresponding to the plurality of convexly shaped flow path end parts 12A. Each of the plurality of concavely shaped flow path end parts 14A is a hole that is formed from a first surface 14F1 toward the interior of the female connector member 14. The first surface 14F1 is a surface that faces toward the male connector member 12 at a time of being attached. In the case that the convexly shaped flow path end parts 12A are fitted into the concavely shaped flow path end parts 14A, the flow passages of the concavely shaped flow path end parts 14A and the flow passages of the convexly shaped flow path end parts 12A communicate with each other. In this case, at the concavely shaped flow path end parts 14A, a seal member (not shown) is provided to thereby seal a gap between the convexly shaped flow path end parts 12A with which they are fitted, and to suppress leakage of the fluid. The plurality of concavely shaped flow path end parts 14A may be divided into at least three groups of columns arranged alongside one another at intervals in one direction. FIG. 1 shows a case in which two groups of columns are arranged on the first surface 14F1.

Each of the plurality of tube connecting portions 14B projects out from a second surface 14F2 of the female connector member 14. The second surface 14F2 is a surface on an opposite side of the first surface 14F1 of the female connector member 14. The plurality of tube connecting portions 14B are provided corresponding to the plurality of concavely shaped flow path end parts 14A. The tube connecting portions 14B communicate with the plurality of concavely shaped flow path end parts 14A. One end of a tube (not shown) is attached to the tube connecting portions 14B.

The attachable and detachable structural part 16 is a portion that is formed in a structure that is capable of being attached and detached. The attachable and detachable structural part 16 is equipped with a first joined body 16A and a second joined body 16B. The first joined body 16A is provided on one of the male connector member 12 and the female connector member 14. The second joined body 16B is provided on another of the male connector member 12 and the female connector member 14.

According to the present embodiment, the first joined body 16A is disposed on the female connector member 14, and the second joined body 16B is disposed on the male connector member 12. Moreover, the first joined body 16A may be disposed on the male connector member 12, and the second joined body 16B may be disposed on the female connector member 14.

The first joined body 16A is provided on both end parts of the female connector member 14 in a direction in which the convexly shaped flow path end parts 12A that constitute the group of columns are arranged alongside one another. Similarly, the second joined body 16B is provided on both end parts of the male connector member 12 in a direction in which the concavely shaped flow path end parts 14A that constitute the group of columns are arranged alongside one another. According to the present embodiment, although the number of the first joined bodies 16A is two, the present invention is not necessarily limited to this feature, and the number may be greater than or equal to three, or may be one. The same applies to the number of the second joined bodies 16B.

The first joined body 16A includes a first base member 20, an extending member 22, and a base biasing member 24. The first base member 20 is a foundation portion for the extending member 22. The first base member 20 may be shaped in the form of a plate. According to the present embodiment, although the first base member 20 is formed integrally together with the female connector member 14, it may be a separate body. Moreover, in the case that the first joined body 16A is disposed on the male connector member 12, the first base member 20 is formed integrally together with the male connector member 12. A concave part 20A for the purpose of positioning the base biasing member 24 is formed on the first base member 20.

The extending member 22 extends from the first base member 20 along a direction of insertion and removal DA. One of the direction of insertion and removal DA is a direction of insertion DA1 in which the convexly shaped flow path end parts 12A are inserted into the concavely shaped flow path end parts 14A. The other of the direction of insertion and removal DA is a direction of removal DA2 in which the convexly shaped flow path end parts 12A are removed from the concavely shaped flow path end parts 14A.

The extending member 22 includes a proximal end part 22A, a first intermediate part 22B, a second intermediate part 22C, and a distal end part 22D. The proximal end part 22A is fixed to a bottom surface of the concave part 20A of the first base member 20. The first intermediate part 22B is disposed between the proximal end part 22A and the second intermediate part 22C, and is formed, for example, in a cylindrical columnar shape. The second intermediate part 22C is disposed between the first intermediate part 22B and the distal end part 22D, and is formed, for example, in a cylindrical columnar shape. The diameter of the second intermediate part 22C is larger than the diameter of the first intermediate part 22B. The distal end part 22D is formed, for example, in a hemispherical shape. The diameter of the distal end part 22D is larger than the diameter of the second intermediate part 22C. An arcuately shaped inclined surface 22SL is formed on the distal end part 22D. The inclined surface 22SL is inclined in a manner so as to come closer to the axis of the extending member 22 as it approaches the distal end of the extending member 22. Moreover, in the case that the extending member 22 is not of a cylindrical columnar shape but rather is of a polygonal columnar shape, the cross-sectional area of the second intermediate part 22C is larger than the cross-sectional area of the first intermediate part 22B. Further, the cross-sectional area of the distal end part 22D is larger than the cross-sectional area of the second intermediate part 22C.

The outer peripheral surface of the extending member 22 includes a first stepped portion 22X and a second stepped portion 22Y. The first stepped portion 22X is a step that is formed by the second intermediate part 22C and the distal end part 22D. The second stepped portion 22Y is a step that is formed by the first intermediate part 22B and the second intermediate part 22C. The second stepped portion 22Y is positioned between the first stepped portion 22X and the proximal end of the extending member 22, and is positioned more on an inner side than the first stepped portion 22X. Moreover, the proximal end of the extending member 22 is one end (a fixed end) of the proximal end part 22A that is fixed to the first base member 20.

The base biasing member 24 biases the second joined body 16B in a manner so as to separate the first base member 20 away from the second joined body 16B. The base biasing member 24 may be a coil spring. The base biasing member 24 can be constituted, for example, by a coil portion 24A and a coil seat portion 24B.

The coil portion 24A and the coil seat portion 24B are inserted through the extending member 22, and are disposed between the first base member 20 and the second joined body 16B. The coil seat portion 24B is capable of sliding with respect to the extending member 22. The coil portion 24A is capable of expanding and contracting in the direction of insertion and removal DA. One end in the direction of insertion and removal DA of the coil portion 24A is fixed to a bottom surface of the concave part 20A of the first base member 20. The other end in the direction of insertion and removal DA of the coil portion 24A is fixed to the coil seat portion 24B. The coil seat portion 24B, in the case that the extending member 22 is inserted into an insertion hole 30IH, abuts against the first surface 12F1 of the male connector member 12.

In a non-engaged state (refer to FIG. 1) in which the convexly shaped flow path end parts 12A and the concavely shaped flow path end parts 14A are not engaged with each other, the coil portion 24A is extended. In this state, a part of the coil portion 24A and the coil seat portion 24B project out from the concave part 20A of the first base member 20. On the other hand, in an engaged state (refer to FIG. 2) in which the convexly shaped flow path end parts 12A and the concavely shaped flow path end parts 14A are engaged with each other, the coil portion 24A is compressed. In this state, the entirety of the base biasing member 24 is accommodated in the concave part 20A of the first base member 20.

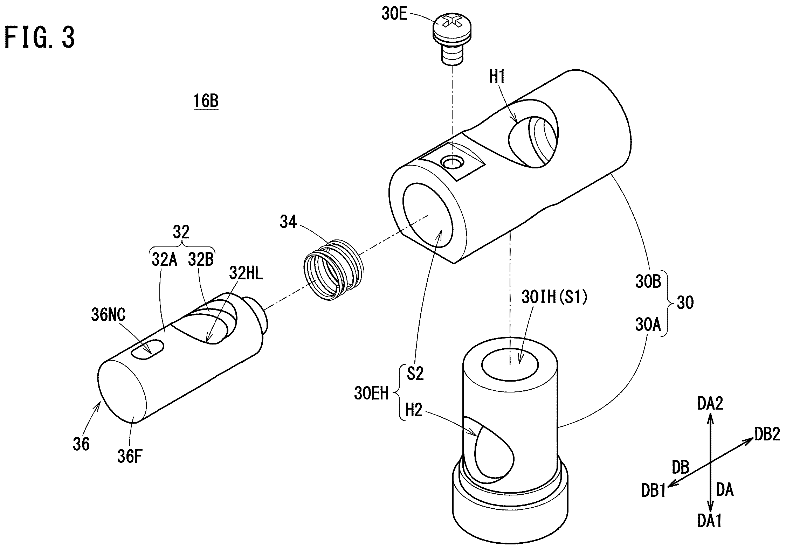

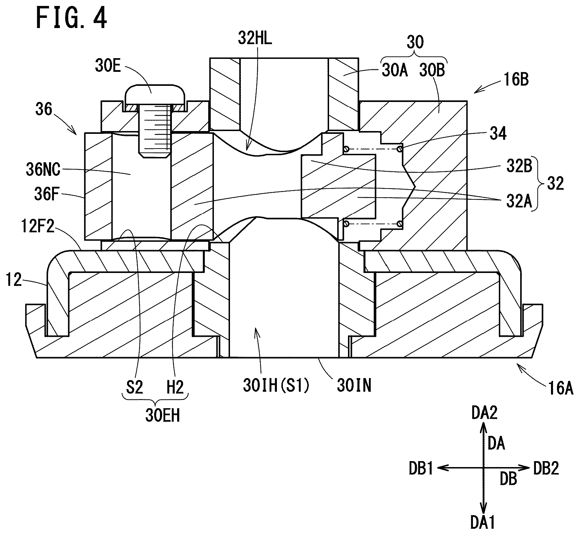

The second joined body 16B is disposed on the second surface 12F2 of the male connector member 12. FIG. 3 is an exploded perspective view showing the second joined body 16B according to the first embodiment. FIG. 4 is a cross-sectional view showing the second joined body 16B according to the first embodiment. The second joined body 16B includes a second base member 30, a stopper member 32, a stopper biasing member 34, and an operating member 36.

The second base member 30 is a foundation portion for the second joined body 16B. The second base member 30 may be shaped in the form of a plate. The insertion hole 30IH and an engagement hole 30EH are formed on the second base member 30 in a manner so as to intersect with each other. The insertion hole 30IH is a hole into which the extending member 22 is capable of being inserted, and extends along the direction of insertion and removal DA. The engagement hole 30EH is a hole for the purpose of causing the stopper member 32 to engage with the first stepped portion 22X and the second stepped portion 22Y in the extending member 22, and extends along a direction of engagement and disengagement DB.

The direction of engagement and disengagement DB intersects with the direction of insertion and removal DA. Preferably, the direction of engagement and disengagement DB is perpendicular to the direction of insertion and removal DA. The direction of engagement and disengagement DB may be perpendicular with respect to the direction in which the concavely shaped flow path end parts 14A that constitute the group of columns are arranged alongside one another (refer to FIG. 1). Moreover, one of the direction of engagement and disengagement DB is a direction of engagement DB1, and another of the direction of engagement and disengagement DB is a direction of disengagement DB2.

The second base member 30 may be formed by joining an insertion tube member 30A and an engagement tube member 30B. The insertion tube member 30A is inserted into a through hole H1 that is formed in the engagement tube member 30B. The insertion hole 30IH is an inner space S1 that is formed in the insertion tube member 30A. A through hole H2 is formed in the insertion tube member 30A. The through hole H2 communicates with an inner space S2 that is formed in the engagement tube member 30B. The engagement hole 30EH is formed by the through hole H2 and the inner space S2. Moreover, an end part in the direction of disengagement DB2 of the engagement tube member 30B is closed. An end part in the direction of engagement DB1 of the engagement tube member 30B is open.

The stopper member 32 is a portion that engages with the first stepped portion 22X and the second stepped portion 22Y. The stopper member 32 is disposed in the engagement hole 30EH. The stopper member 32 is supported by the second base member 30 (the engagement tube member 30B), in a manner so as to be capable of sliding inside the engagement hole 30EH along the direction of engagement DB1 or the direction of disengagement DB2. The stopper member 32 includes a stopper main body 32A, and a locking member 32B.

A notch 36NC that extends in the direction of engagement and disengagement DB is formed in the stopper main body 32A. A projecting part 30E that projects out into the notch 36NC is provided on the second base member 30 (the engagement tube member 30B). The projecting part 30E may be a screw. Until the projecting part 30E abuts against the end part in the direction of engagement DB1 of the notch 36NC, the stopper main body 32A is capable of sliding in the direction of disengagement DB2. On the other hand, until the projecting part 30E abuts against the end part in the direction of disengagement DB2 of the notch 36NC, the stopper main body 32A is capable of sliding in the direction of engagement DB1.

A through hole 32HL that communicates with the insertion hole 30IH is formed in the stopper main body 32A. The through hole 32HL extends along the direction of insertion and removal DA, and is formed of a size that enables the extending member 22 to be inserted therethrough. The through hole 32HL is positioned at an intersection of the insertion hole 30IH and the engagement hole 30EH. The locking member 32B is disposed in the through hole 32HL. The locking member 32B projects out from the stopper main body 32A and into the through hole 32HL.

The stopper biasing member 34 is a portion that biases the stopper member 32 (the locking member 32B) toward the outer peripheral surface of the extending member 22. The stopper biasing member 34 may be a coil spring. The stopper biasing member 34 is disposed between the second base member 30 (an end part in the direction of disengagement DB2 of the engagement tube member 30B), and the stopper member 32. The stopper biasing member 34 serves to bias the stopper member 32 in the direction of engagement DB1.

The stopper biasing member 34 applies a force (a pressing force) that biases the stopper member 32 in the direction of engagement DB1. Therefore, in the case that the extending member 22 is not inserted into the insertion hole 30IH, then as shown in FIG. 4, the projecting part 30E abuts against an end part in the direction of disengagement DB2 of the notch 36NC. In this case, the locking member 32B is positioned in the insertion hole 30IH.

The operating member 36 is a portion that operates the stopper member 32 in a direction (the direction of disengagement DB2) opposite to the direction (the direction of engagement DB1) in which the stopper biasing member 34 applies the biasing force, and thereby causes the engagement with the stopper member 32 to be released. The operating member 36 is disposed at an end part of the stopper main body 32A in a direction (the direction of engagement DB1) in which the stopper biasing member 34 applies the biasing force. According to the present embodiment, the operating member 36 is formed integrally together with the stopper main body 32A. The operation member 36 includes a pressure receiving surface 36F that is pressed by a user. When the pressure receiving surface 36F is pressed by an operator, the stopper main body 32A slides in the direction of disengagement DB2. Therefore, the locking member 32B slides in the direction of disengagement DB2.

Next, a description will be given concerning the operation of the second joined body 16B when the extending member 22 is inserted. In accordance with the insertion of the convexly shaped flow path end parts 12A into the concavely shaped flow path end parts 14A, the extending member 22 begins to be inserted from an inlet 30IN (see FIG. 4) of the insertion hole 30IH.

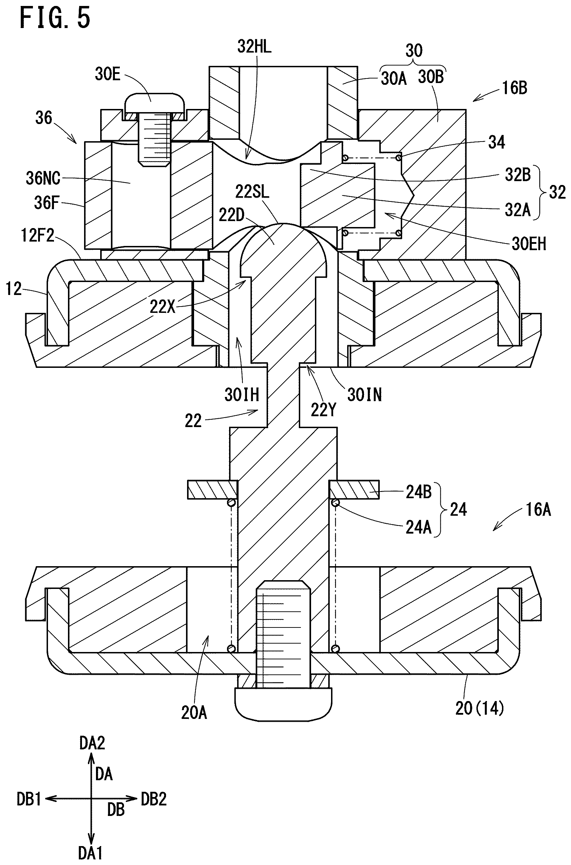

As the insertion of the extending member 22 progresses, as shown in FIG. 5, the distal end part 22D of the extending member 22 enters the through hole 32HL of the stopper member 32. Thereafter, the inclined surface 22SL of the distal end part 22D comes into contact with the locking member 32B of the stopper member 32.

When the extending member 22 is further inserted, the stopper main body 32A, due to the inclined surface 22SL of the extending member 22, slides in the direction of disengagement DB2. In accordance therewith, the locking member 32B is retracted from the insertion hole 30IH.

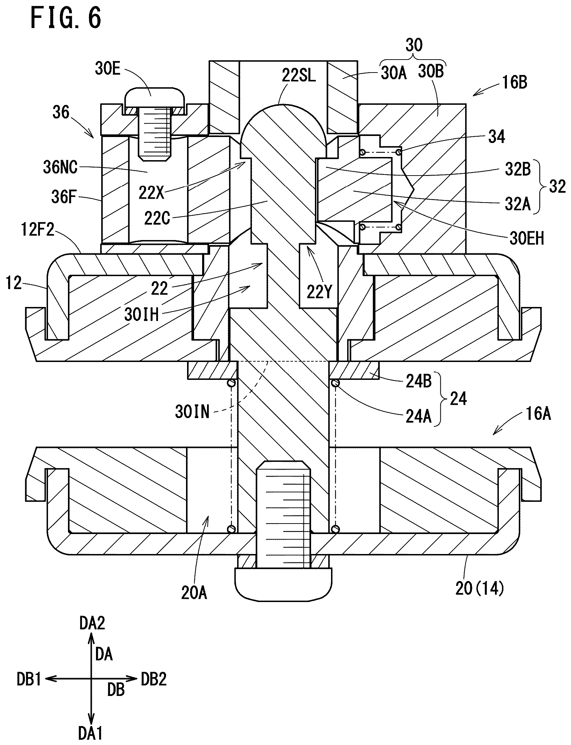

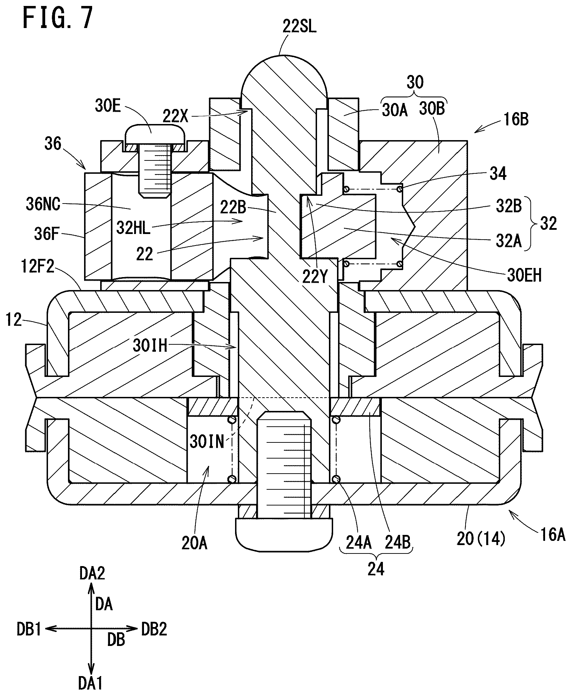

When the insertion of the extending member 22 progresses further and the locking member 32B separates away from the inclined surface 22SL, then as shown in FIG. 6, the stopper member 32, due to the biasing force of the stopper biasing member 34, slides in the direction of engagement DB1. In accordance therewith, the locking member 32B abuts against the outer peripheral surface of the second intermediate part 22C of the extending member 22. As the insertion of the extending member 22 further progresses, the locking member 32B, as shown in FIG. 7, abuts against the outer peripheral surface of the first intermediate part 22B of the extending member 22.

When the insertion of the convexly shaped flow path end parts 12A into the concavely shaped flow path end parts 14A is completed, and an engaged state is brought about in which the concavely shaped flow path end parts 14A and the convexly shaped flow path end parts 12A are engaged with each other, the state in which the locking member 32B abuts against the outer peripheral surface of the first intermediate part 22B is maintained by the biasing force of the stopper biasing member 34. In this state, even if a force that acts to pull out the extending member 22 is generated, the locking member 32B and the second stepped portion 22Y engage with each other, and thereby the pulling out of the extending member 22 from the insertion hole 30IH is suppressed. Accordingly, even if the pressure of the fluid flowing between the convexly shaped flow path end parts 12A and the concavely shaped flow path end parts 14A is large, it is possible to avoid a situation in which the connection between the male connector member 12 and the female connector member 14 is unintentionally released.

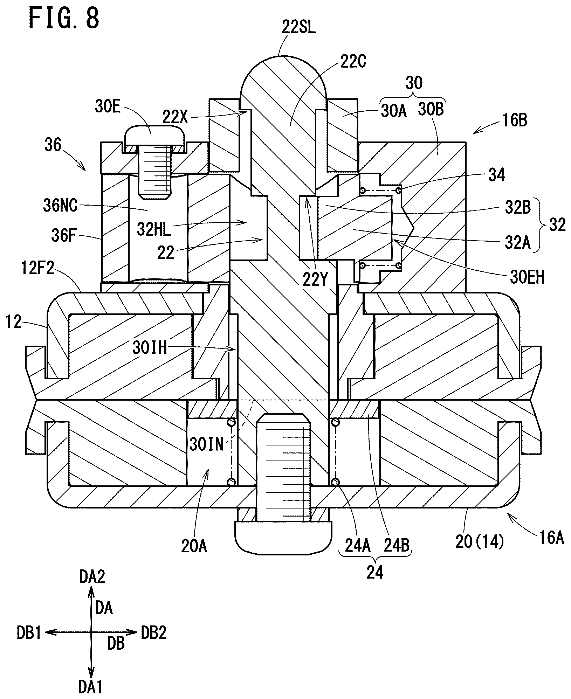

Next, a description will be given concerning the operation of the second joined body 16B when the extending member 22 is removed. In a state in which the second stepped portion 22Y and the locking member 32B are engaged with each other, when the operator presses the pressure receiving surface 36F of the operating member 36, the stopper main body 32A, as shown in FIG. 8, slides in the direction of disengagement DB2. Therefore, the locking member 32B moves in the direction of disengagement DB2, and the engagement with the second stepped portion 22Y is released. In accordance therewith, the locking member 32B abuts against the outer peripheral surface of the second intermediate part 22C. At that time, the biasing force of the base biasing member 24 acts, and thereby the extending member 22 is guided in a direction to be removed from the insertion hole 30IH. Accordingly, the extending member 22 can start to be removed from the insertion hole 30IH without the user having to perform an operation to press the extending member 22, which is user friendly.

At the moment when the extending member 22 is guided in the direction to be removed from the insertion hole 30IH, a large force may act in that direction. For example, one cause of this is a case in which a pressure difference occurs between the interior and the exterior of the flow path that communicates with the convexly shaped flow path end parts 12A and the concavely shaped flow path end parts 14A. In this case, as shown in FIG. 6, the locking member 32B engages with the first stepped portion 22X. Accordingly, pulling out of the extending member 22 from the insertion hole 30IH does not take place. As a result, the connection between the male connector member 12 and the female connector member 14 can be prevented from suddenly being released.

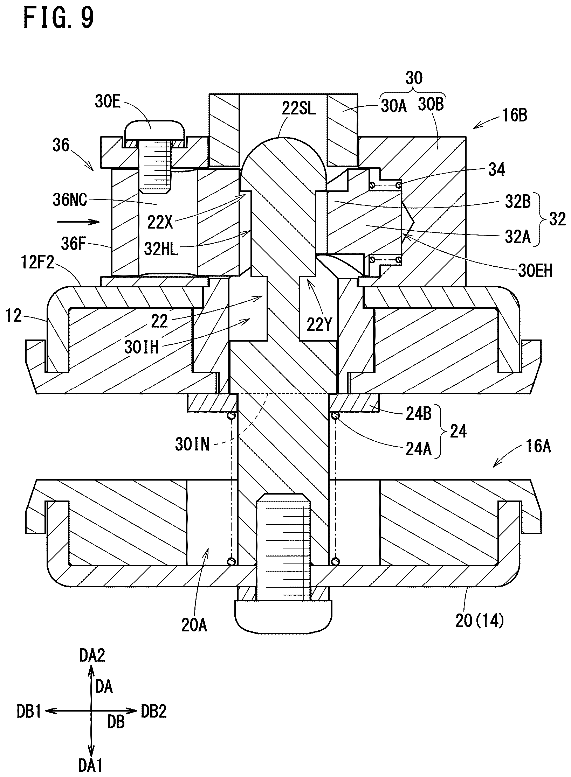

When the pressing of the pressure receiving surface 36F by the operator continues, as shown in FIG. 9, the stopper main body 32A slides in the direction of disengagement DB2, thereby causing the locking member 32B to move further in the direction of disengagement DB2. Therefore, the engagement of the locking member 32B by the first stepped portion 22X is released. In this case, the extending member 22 is capable of being removed from the insertion hole 30IH. In this manner, the release of the connection between the male connector member 12 and the female connector member 14 can be safely carried out.

The first embodiment may be modified. For example, the second joined body 16B is not limited to a case of being disposed on the second surface 12F2 of the male connector member 12. The second joined body 16B may be attached to a side surface 12F3 (see FIG. 1) of the male connector member 12 in the direction in which the concavely shaped flow path end parts 14A that constitute the group of columns are arranged alongside one another. In this case, in the engaged state of the convexly shaped flow path end parts 12A and the concavely shaped flow path end parts 14A, the installation location of the first joined body 16A with respect to the female connector member 14 is changed, in a manner so that the extending member 22 is capable of being inserted into the insertion hole 30IH.

There may be two or more of the extending members 22. In this case, the one insertion hole 30IH may be a hole into which the two or more of the extending members 22 can be inserted. The insertion hole 30IH may be provided in a plurality corresponding to the two or more of the extending members 22. Similarly, the one stopper member 32 may engage with each of the two or more of the extending members 22. The stopper member 32 may be provided in a plurality corresponding to each of the two or more of the extending members 22. The same applies to the stopper biasing member 34 and the operating member 36.

### (Second Embodiment)

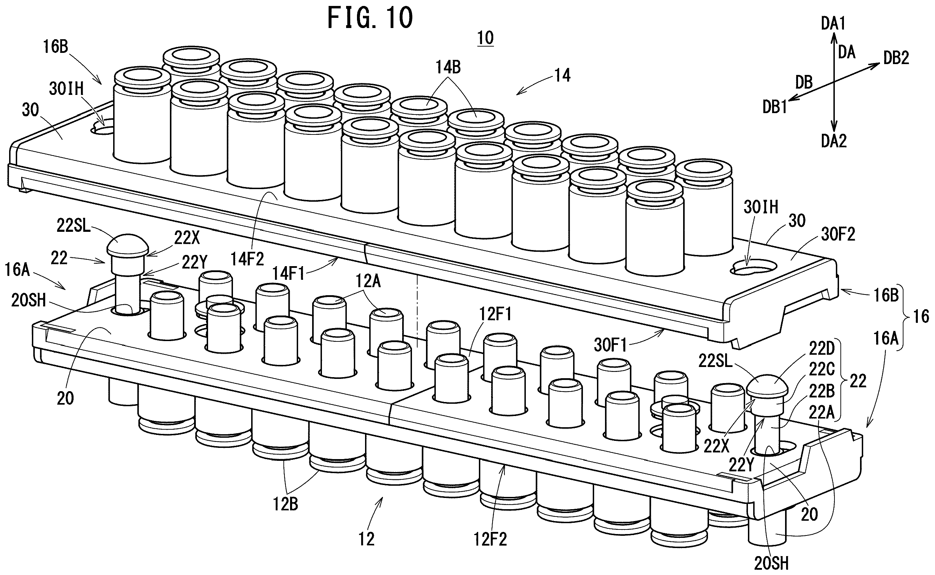

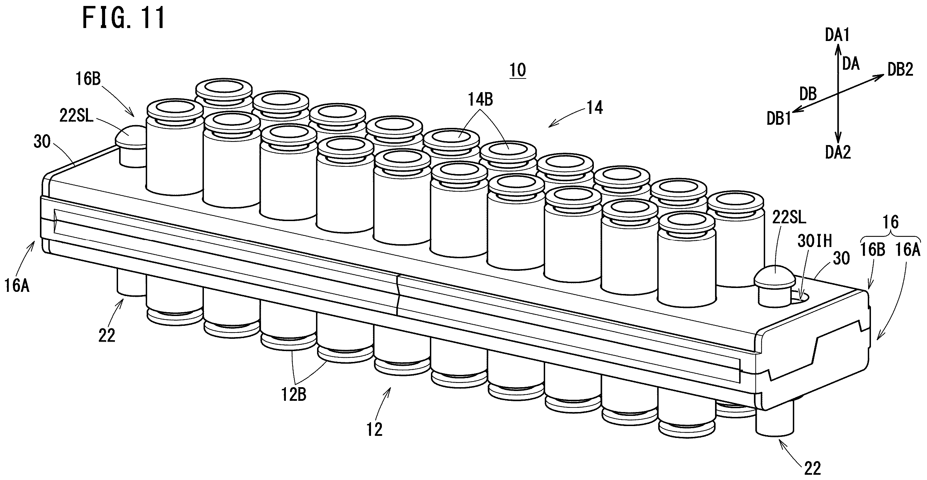

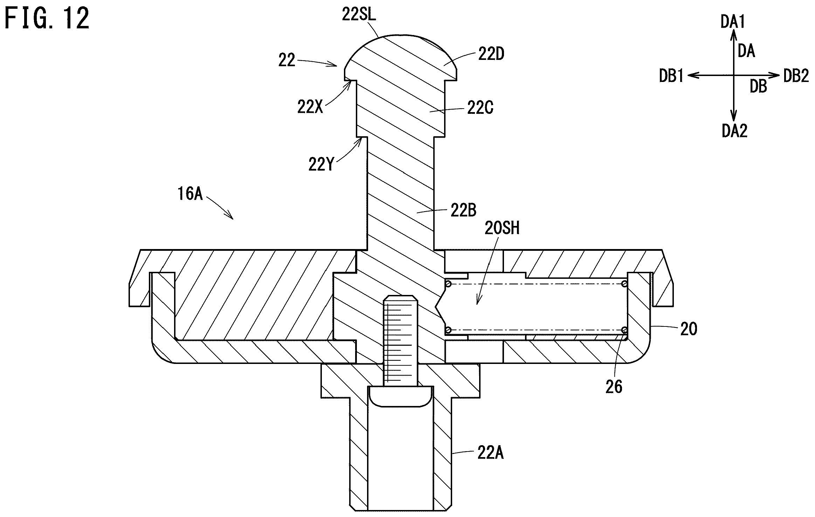

Next, a description will be given concerning the attachable and detachable structural part 16 according to a second embodiment. Moreover, in the second embodiment, the same constituent elements as those of the above-described attachable and detachable structural part 16 are denoted by the same reference numerals, and detailed description of such features will be omitted. FIG. 10 is a schematic diagram showing the connection device 10 according to the second embodiment at a time of being disconnected. FIG. 11 is a schematic diagram showing the connection device 10 according to the second embodiment at a time of being connected. FIG. 12 is a cross-sectional view showing the first joined body 16A according to the second embodiment.

According to the second embodiment, the first joined body 16A is disposed on the male connector member 12, and the second joined body 16B is disposed on the female connector member 14. Moreover, the first joined body 16A may be disposed on the female connector member 14, and the second joined body 16B may be disposed on the male connector member 12.

In the second embodiment, the structure of the first joined body 16A differs from that in the first embodiment. The first joined body 16A of the second embodiment includes the first base member 20, and the extending member 22. Further, the first joined body 16A of the second embodiment, instead of the base biasing member 24, includes an extended biasing member 26 (refer to FIG. 12).

In the first base member 20 of the second embodiment, instead of the concave part 20A, a slide hole 20SH is formed therein. The slide hole 20SH extends along the direction of engagement and disengagement DB. The extending member 22 of the second embodiment is supported by the first base member 20 so as to be capable of sliding in the direction of engagement and disengagement DB.

The extended biasing member 26 serves to bias the extending member 22 in the direction of engagement DB1. The extended biasing member 26 may be a coil spring. The extended biasing member 26 is disposed in the slide hole 20SH, and is positioned between the extending member 22 and the first base member 20. An end part in the direction of engagement DB1 of the extended biasing member 26 is fixed to a side surface of the first intermediate part 22B of the extending member 22. An end part in the direction of disengagement DB2 of the extended biasing member 26 is fixed to an inner surface of the first base member 20.

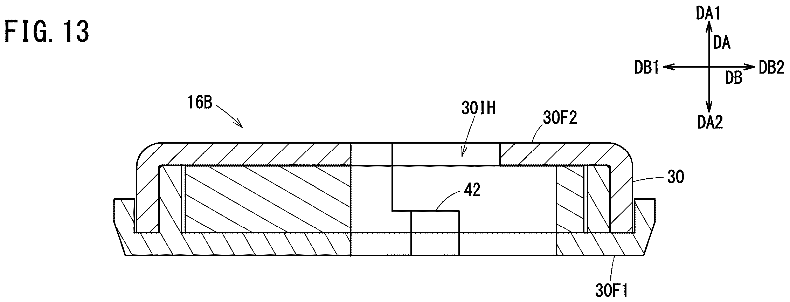

FIG. 13 is a cross-sectional view showing the second joined body 16B according to the second embodiment. In the second embodiment, the structure of the second joined body 16B differs from that in the second embodiment. The second joined body 16B of the second embodiment includes the second base member 30.

In the first embodiment, the second base member 30 is disposed on the second surface 12F2 of the male connector member 12. In contrast thereto, according to the present embodiment, the second base member 30 is formed integrally together with the female connector member 14. A first surface 30F1 of the second base member 30 may lie on the same plane as the first surface 14F1 of the female connector member 14. Similarly, a second surface 30F2 of the second base member 30 may lie on the same plane as the second surface 14F2 of the female connector member 14. Moreover, the first surface 30F1 of the second base member 30 is a surface that faces toward the first joined body 16A (the first base member 20) at a time of being attached. The second surface 30F2 of the second base member 30 is a surface on an opposite side of the first surface 30F1 of the second base member 30.

In the first embodiment, the insertion hole 30IH and the engagement hole 30EH are formed in the second base member 30. In contrast thereto, according to the present embodiment, the engagement hole 30EH is not formed. Instead, the insertion hole 30IH is formed in a manner so that the extending member 22 is capable of sliding in the direction of engagement and disengagement DB. The insertion hole 30IH extends in the direction of insertion and removal DA from the first surface 30F1 up to the second surface 30F2 of the second base member 30, and penetrates through the second base member 30.

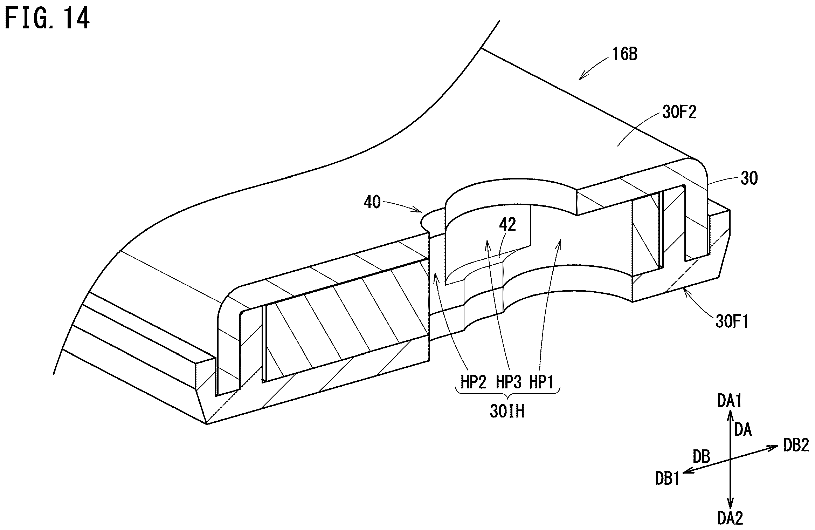

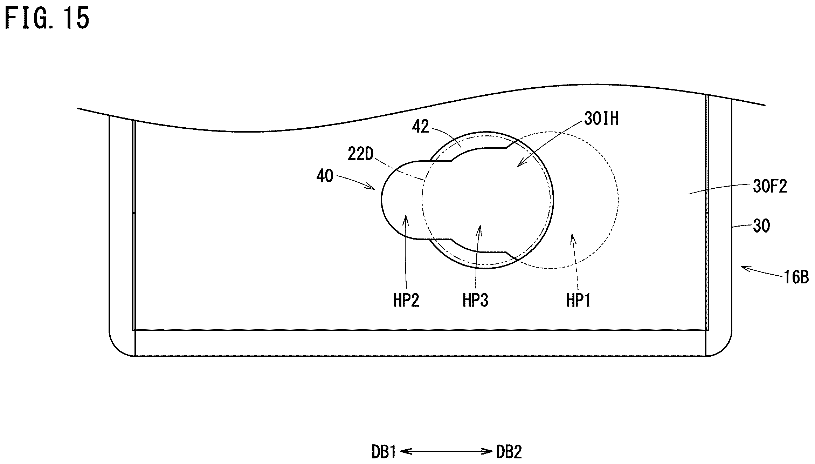

FIG. 14 is a perspective view of FIG. 13. FIG. 15 is a front view of the insertion hole 30IH according to the second embodiment as viewed from the direction of removal DA2. The insertion hole 30IH in the present embodiment is constituted by a first hole portion HP1, a second hole portion HP2, and a third hole portion HP3. The first hole portion HP1 is positioned on a side in the direction of disengagement DB2 of the insertion hole 30IH. The second hole portion HP2 is positioned on a side in the direction of engagement DB1 of the insertion hole 30IH. The third hole portion HP3 is positioned between the first hole portion HP1 and the second hole portion HP2, and communicates with the first hole portion HP1 and the second hole portion HP2. When the insertion hole 30IH is viewed from the front in the direction of insertion DA1, the second hole portion HP2 and the third hole portion HP3 are formed in the second surface 30F2 of the second base member 30. On the other hand, when the insertion hole 30IH is viewed from the front in the direction of removal DA2, the first hole portion HP1, the second hole portion HP2, and the third hole portion HP3 are formed in the first surface 30F1 of the second base member 30. Stated otherwise, the insertion hole 30IH penetrates through the second base member 30 at the second hole portion HP2 and the third hole portion HP3, but does not penetrate through the second base member 30 at the first hole portion HP1.

The first hole portion HP1 is capable of enabling the first stepped portion 22X and the second stepped portion 22Y to pass therethrough. The second hole portion HP2 is incapable of enabling the first stepped portion 22X and the second stepped portion 22Y to pass therethrough. The third hole portion HP3 is capable of enabling the second stepped portion 22Y to pass therethrough, but is incapable of enabling the first stepped portion 22X to pass therethrough. Accordingly, the extending member 22 can be inserted only through the first hole portion HP1 of the insertion hole 30IH. Further, when the extending member 22 is inserted with respect to the first hole portion HP1 up to the first intermediate part 22B, the extending member 22 becomes capable of sliding in the second hole portion HP2 via the third hole portion HP3.

The second joined body 16B of the second embodiment, in addition to the aforementioned second base member 30, includes a first stopper member 40, and a second stopper member 42. The first stopper member 40 is a portion with which the second stepped portion 22Y engages. The first stopper member 40 is a peripheral edge portion of the second hole portion HP2 in the second surface 30F2 of the second base member 30. The second stopper member 42 is a portion with which the first stepped portion 22X engages. The second stopper member 42 is a protruding portion that projects out from the inner surface of the second base member 30 in the third hole portion HP3 into the third hole portion HP3. The second stopper member 42 is positioned between the first surface 30F1 and the second surface 30F2. Moreover, the stopper member 32, the stopper biasing member 34, and the operating member 36 are not provided in the second joined body 16B of the second embodiment.

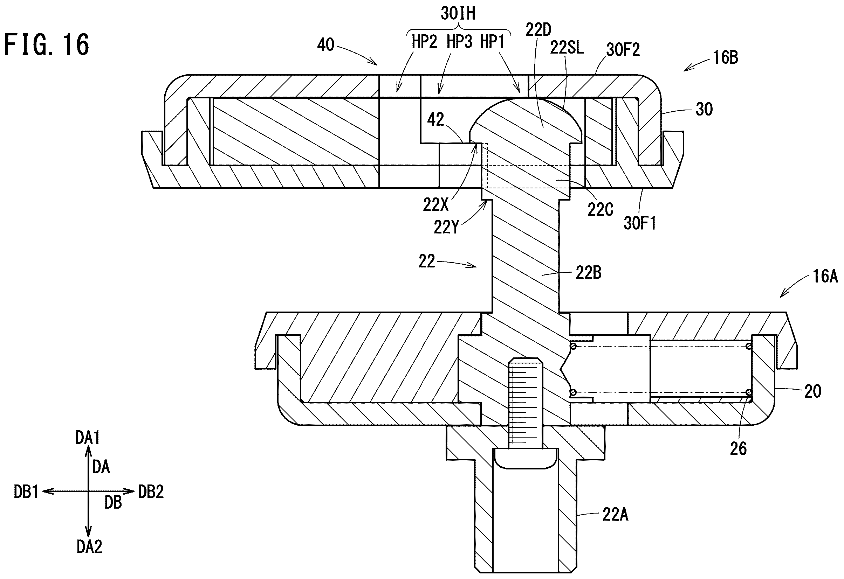

Next, a description will be given concerning the operation of the second joined body 16B when the extending member 22 is inserted. In the present embodiment, the operator operates the male connector member 12 and the female connector member 14, and thereby the insertion of the extending member 22 into the insertion hole 30IH is carried out. As shown in FIG. 16, the extending member 22 is inserted from the first hole portion HP1 of the insertion hole 30IH. As the insertion of the extending member 22 progresses, and the distal end part 22D of the extending member 22 comes into contact with the inner surface of the second base member 30, the first intermediate part 22B of the extending member 22 is contained within the first hole portion HP1. In this case, the extending member 22 is capable of sliding in the direction of engagement DB1.

When, in accordance with the operation of the operator, the extending member 22 is moved in the direction of engagement DB1, as shown in FIG. 15, the outer peripheral surface of the distal end part 22D of the extending member 22 comes into contact with the inner surface of the second base member 30 in the third hole portion HP3. In this case, the extending member 22 is incapable of moving in the direction of engagement DB1.

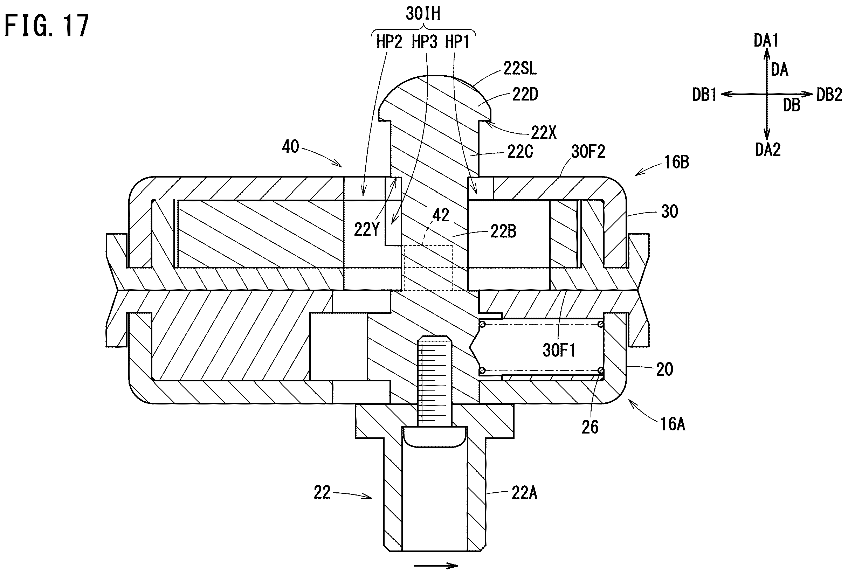

Thereafter, in accordance with the operation by the operator, the extending member 22 is moved in the direction of insertion DA1. When the first base member 20 and the second base member 30 come into contact with each other, as shown in FIG. 17, the second intermediate part 22C and the distal end part 22D project out from the second surface 30F2 of the second base member 30. In this case, the extending member 22 is capable of sliding in the direction of engagement DB1.

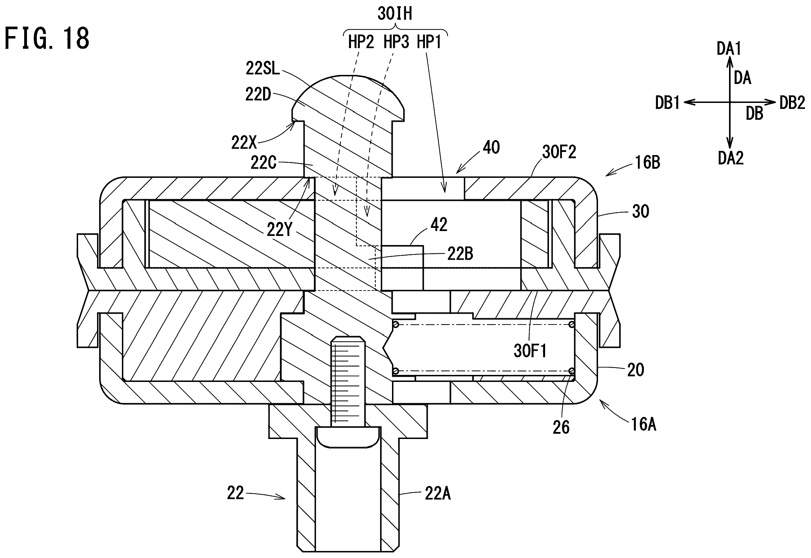

Thereafter, in accordance with the operation of the operator, when the extending member 22 is moved in the direction of engagement DB1, as shown in FIG. 18, the outer peripheral surface of the first intermediate part 22B of the extending member 22 comes into contact with the inner surface of the second base member 30 in the second hole portion HP2. In this case, the first intermediate part 22B of the extending member 22 is disposed in the second hole portion HP2, and the extending member 22 becomes incapable of moving in the direction of engagement DB1.

In the state in which the first intermediate part 22B of the extending member 22 is disposed in the second hole portion HP2, even if the operation of the operator ceases, the biasing force of the extended biasing member 26 is maintained. In this state, even if a force that acts to pull out the extending member 22 is generated, the first stopper member 40 and the second stepped portion 22Y engage with each other, and thereby the pulling out of the extending member 22 from the insertion hole 30IH is suppressed. Accordingly, even if the pressure of the fluid flowing between the convexly shaped flow path end parts 12A and the concavely shaped flow path end parts 14A is large, it is possible to avoid a situation in which the connection between the male connector member 12 and the female connector member 14 is unintentionally released.

Next, a description will be given concerning the operation of the second joined body 16B when the extending member 22 is removed. In the present embodiment, the operator operates the male connector member 12 and the female connector member 14, and thereby the removal of the extending member 22 from the insertion hole 30IH is carried out. At first, the extending member 22 is moved in the direction of disengagement DB2 (refer to FIG. 17), and then is moved in the direction of removal DA2.

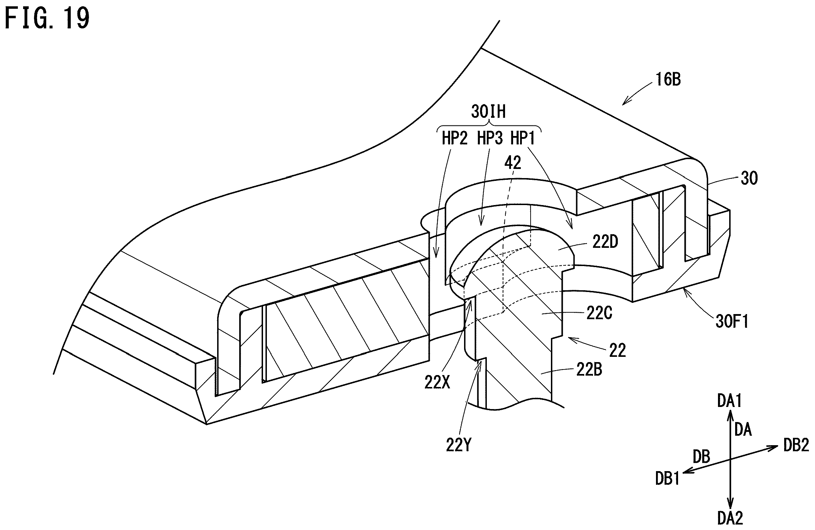

At that time, as noted previously, a large force may act in the direction (the direction of removal DA2) in which the extending member 22 is removed from the insertion hole 30IH. In this case, as shown in FIG. 19, the second stopper member 42 engages with the first stepped portion 22X of the extending member 22 that is being pulled out in the direction of removal DA2. Accordingly, pulling out of the extending member 22 from the insertion hole 30IH does not take place. As a result, the connection between the male connector member 12 and the female connector member 14 can be prevented from suddenly being released.

In a state in which the first stepped portion 22X and the second stopper member 42 are engaged with each other, the extending member 22 is permitted to move in the direction of disengagement DB2. By the extending member 22 moving in the direction of disengagement DB2, when the extending member 22 is positioned at the first hole portion HP1 of the insertion hole 30IH, as shown in FIG. 16, the extending member 22 becomes capable of being removed from the insertion hole 30IH. In this manner, the release of the connection between the male connector member 12 and the female connector member 14 can be safely carried out.

The second embodiment may be modified. For example, there may be one or more, or there may be three or more of the extending members 22. In the case that there are a plurality of the extending members 22, the insertion holes 30IH are formed in a number corresponding to the number of the extending members 22.

### (Third Embodiment)

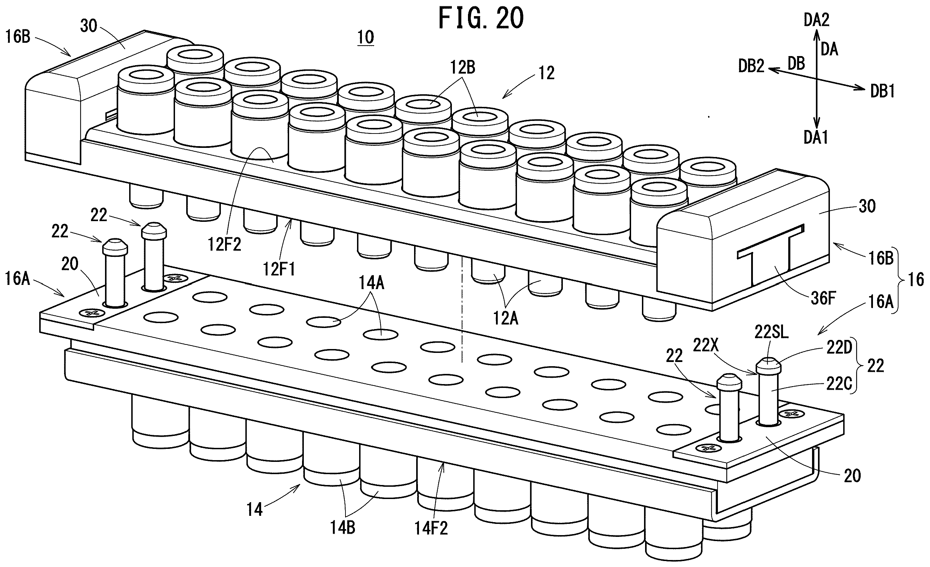

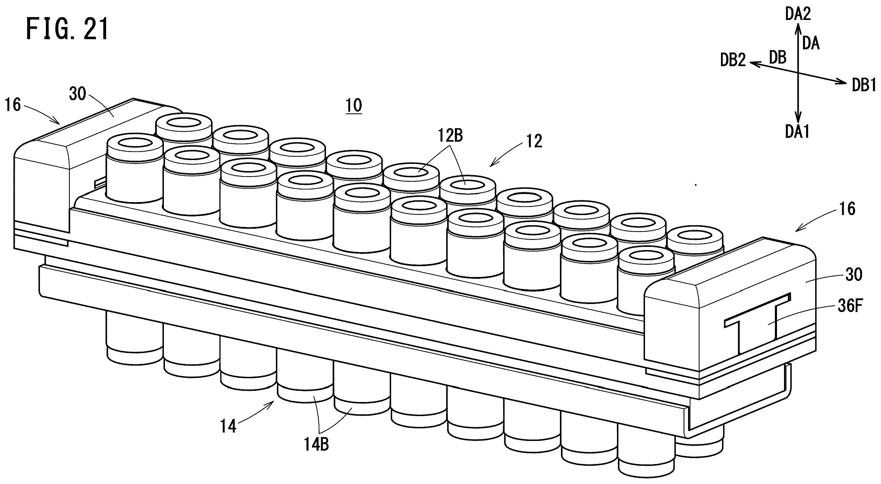

Next, a description will be given concerning the attachable and detachable structural part 16 according to a third embodiment. Moreover, in the third embodiment, the same constituent elements as those of the above-described attachable and detachable structural part 16 are denoted by the same reference numerals, and detailed description of such features will be omitted. FIG. 20 is a schematic diagram showing the connection device 10 according to the third embodiment at a time of being disconnected. FIG. 21 is a schematic diagram showing the connection device 10 according to the third embodiment at a time of being connected.

According to the third embodiment, in the same manner as the first embodiment, the first joined body 16A is disposed on the female connector member 14, and the second joined body 16B is disposed on the male connector member 12. Moreover, the first joined body 16A may be disposed on the male connector member 12, and the second joined body 16B may be disposed on the female connector member 14.

In the third embodiment, the structure of the first joined body 16A differs from that in the first embodiment. The first joined body 16A of the third embodiment includes the first base member 20, and two of the extending members 22. Moreover, in the first joined body 16A of the third embodiment, the base biasing member 24 is not provided. Therefore, the concave part 20A for the purpose of positioning the base biasing member 24 is not formed on the first base member 20.

The two of the extending members 22 are disposed, for example, at an interval in the widthwise direction of the female connector member 14. The widthwise direction of the female connector member 14 is a direction that is perpendicular, respectively, to both the direction of insertion and removal DA, and the direction of engagement and disengagement DB. Each of the extending members 22 is formed with the same structure.

In the extending member 22 of the third embodiment, the stepped portion that is formed on the outer peripheral surface is the first stepped portion 22X only. The extending member 22 is constituted, for example, by the second intermediate part 22C, and the distal end part 22D. In the present embodiment, one end of the second intermediate part 22C is a proximal end of the extending member 22, and is fixed to the first base member 20. Another end of the second intermediate part 22C is connected to the distal end part 22D.

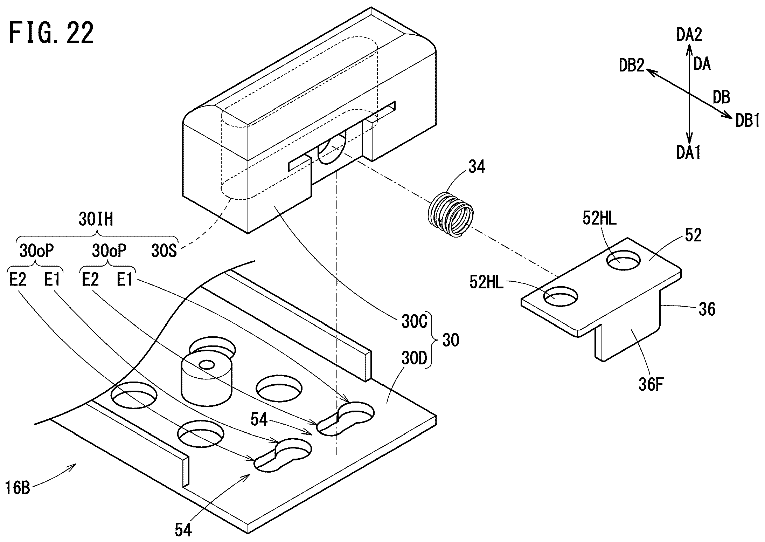

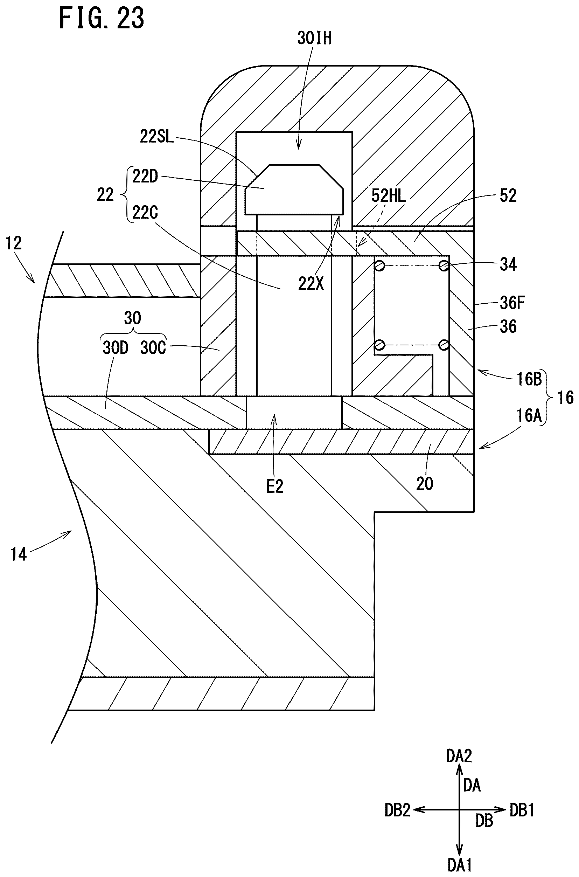

FIG. 22 is an exploded perspective view showing the second joined body 16B according to the third embodiment. FIG. 23 is a cross-sectional view showing the attachable and detachable structural part 16 according to the third embodiment. The second joined body 16B includes the second base member 30, a first stopper member 52, a second stopper member 54, the stopper biasing member 34, and the operating member 36.

The engagement hole 30EH is not formed in the second base member 30 of the present embodiment. The second base member 30 of the present embodiment can be constituted by joining a base main body 30C and a cover plate 30D. The base main body 30C is formed in a box-like shape having an opening on a side in the direction of insertion DA1. The cover plate 30D covers an opening on the side in the direction of insertion DA1 of the base main body 30C. Two inlet openings 30oP for the purpose of inserting the extending member 22 are formed in the cover plate 30D. A space 30S surrounded by the cover plate 30D and the base main body 30C, and the two of the inlet openings 30oP form one insertion hole 30IH for the extending members 22.

The inlet openings 30oP are formed in a manner so that the extending members 22 are capable of sliding therethrough. The direction in which the extending members 22 slide through the inlet openings 30oP, according to the present embodiment, is a widthwise direction of the male connector member 12. The inlet openings 30oP each have a first inlet portion E1 and a second inlet portion E2. The first inlet portion E1 enables the first stepped portion 22X to pass therethrough. The second inlet portion E2 is incapable of enabling the first stepped portion 22X to pass therethrough. Accordingly, the extending members 22 can be inserted into the insertion hole 30IH from the first inlet portions E1. Further, when the extending members 22 are inserted into the insertion hole 30IH up to the second intermediate parts 22C, the extending members 22 become capable of sliding in the second inlet portions E2. From within the surface in the direction of removal DA2 of the cover plate 30D, the peripheral portions of the second inlet portions E2 are the second stopper member 54 at which the extending member 22 engages with the first stepped portion 22X.

The first stopper member 52 penetrates through one side wall of the second base member 30 (the base main body 30C). The first stopper member 52 is supported by the second base member 30 (the base main body 30C), so as to be capable of sliding in the direction of engagement DB1 or in the direction of disengagement DB2.

Two through holes 52HL are formed in the first stopper member 52. A formed portion of the first stopper member 52 where each of the through holes 52HL is formed is disposed in the space 30S in the interior of the second base member 30. Each of the through holes 52HL extends along the direction of insertion and removal DA. The extending member 22 is capable of being inserted through each of the through holes 52HL. A part of peripheral edges of the through holes 52HL in the first stopper member 52 are portions with which the first stepped portions 22X engage.

The operating member 36 is connected to an end part in the direction of engagement DB1 of the first stopper member 52. The end part of the first stopper member 52 to which the operating member 36 is connected is disposed externally of the second base member 30. The stopper biasing member 34 is disposed between the second base member 30 (the base main body 30C) and the operating member 36. The first stopper member 52 is biased, via the operating member 36, by the stopper biasing member 34 on a side in the direction of engagement DB1. In the case that the extending members 22 are not inserted into the insertion hole 30IH, the first stopper member 52 is positioned in the insertion hole 30IH.

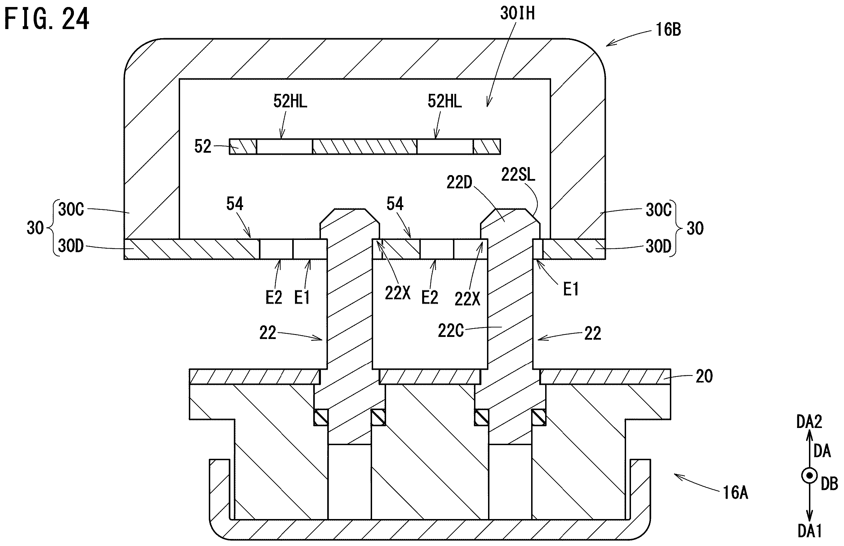

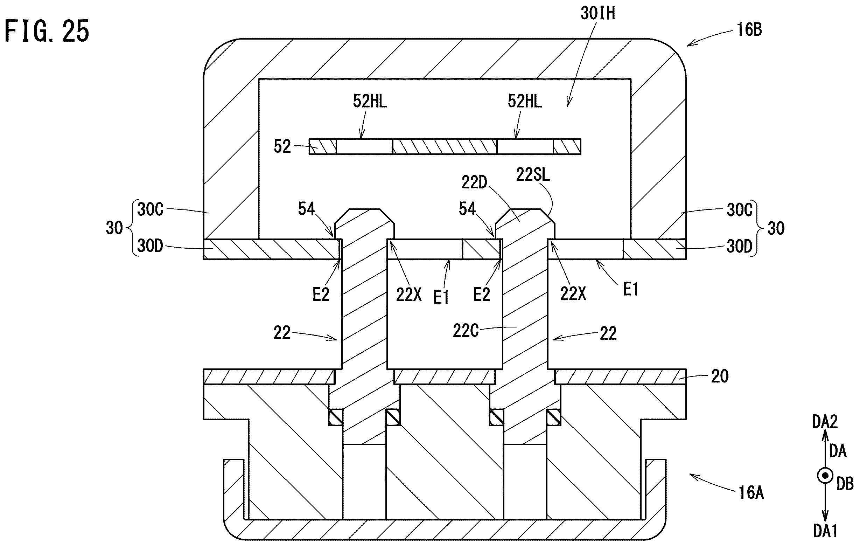

Next, a description will be given concerning the operation of the second joined body 16B when the extending members 22 are inserted. As shown in FIG. 24, the extending members 22 are inserted from the first inlet portions E1 of the inlet openings 30oP. Thereafter, as shown in FIG. 25, the extending members 22 are slid, until the second intermediate parts 22C of the extending members 22 are positioned at the second inlet portions E2.

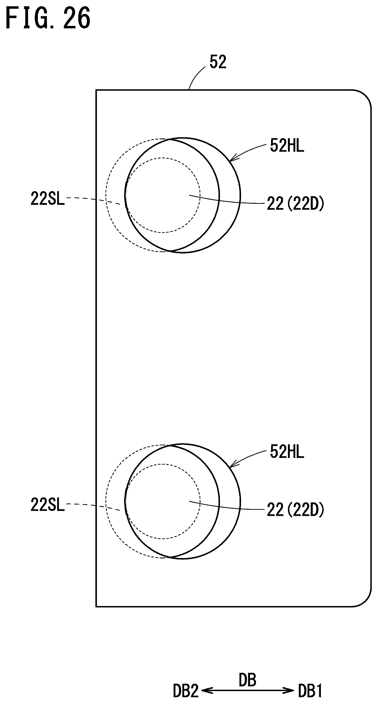

In the case that the second intermediate parts 22C of the extending members 22 are positioned in the second inlet portions E2, the through holes 52HL of the first stopper member 52 are positioned in the direction of removal DA2 of the extending members 22. In this case, when the through holes 52HL are viewed from the front along the direction of removal DA2, as shown in FIG. 26, the distal end part 22D of the extending member 22 and the through holes 52HL are positioned in a manner of being misaligned in the direction of engagement and disengagement DB. Therefore, as the insertion of the extending member 22 into the insertion hole 30IH progresses, the inclined surface 22SL of the distal end part 22D comes into contact with the first stopper member 52. As the insertion of the extending member 22 further progresses, by the inclined surface 22SL of the extending member 22, the first stopper member 52 is made to slide in the direction of disengagement DB2.

As the insertion of the extending members 22 progress, and the distal end parts 22D pass through the through holes 52HL in the direction of removal DA2, then as shown in FIG. 23, by the biasing force of the stopper biasing member 34, the outer peripheral surfaces of the second intermediate parts 22C abut against the inner surfaces of the first stopper member 52 that define the through holes 52HL. This state is maintained by the biasing force of the stopper biasing member 34. In this state, even if a force that acts to pull out the extending members 22 is generated, the peripheral edge portions of the through holes 52HL in the first stopper member 52 catch on the first stepped portion 22X of the extending member 22, and the first stopper member 52 and the first stepped portions 22X engage with each other. Therefore, pulling out of the extending members 22 from the insertion hole 30IH does not take place. Accordingly, even if the pressure of the fluid flowing between the convexly shaped flow path end parts 12A and the concavely shaped flow path end parts 14A is large, it is possible to avoid a situation in which the connection between the male connector member 12 and the female connector member 14 is unintentionally released.

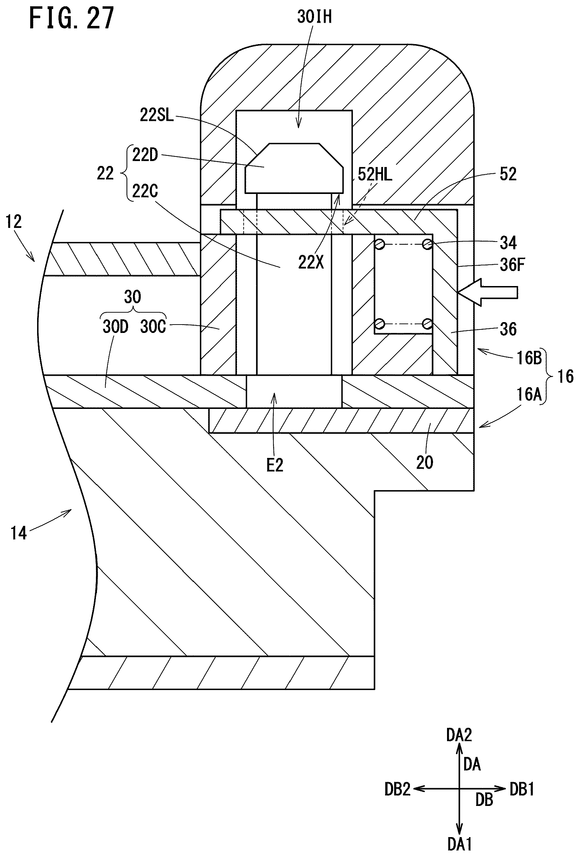

Next, a description will be given concerning the operation of the second joined body 16B when the extending members 22 are removed. When the pressure receiving surface 36F of the operating member 36 is pressed by the operator, as shown in FIG. 27, the first stopper member 52 that is connected to the operating member 36 moves in the direction of disengagement DB2. Therefore, the peripheral edge portions of the through holes 52HL in the first stopper member 52 moves in the direction of disengagement DB2. Accordingly, the extending members 22 are capable of passing through the through holes 52HL.

At that time, as noted previously, a large force may act in the direction in which the extending members 22 are removed from the insertion hole 30IH. In this case, as shown in FIG. 25, the second stopper member 54 engages with the first stepped portions 22X of the extending members 22 that are being pulled out. As noted previously, the second stopper member 54 is peripheral portions of the second inlet portions E2 in the surface on the direction of removal DA2 of the cover plate 30D. Accordingly, pulling out of the extending members 22 from the insertion hole 30IH does not take place. As a result, the connection between the male connector member 12 and the female connector member 14 can be prevented from suddenly being released.

After the engagement with the first stepped portions 22X is released, when the extending member 22 is slid until the second intermediate parts 22C of the extending members 22 are positioned at the first inlet portions E1, , then as shown in FIG. 24, the extending members 22 become capable of being removed from the insertion hole 30IH. In this manner, the release of the connection between the male connector member 12 and the female connector member 14 can be safely carried out.

### (Fourth Embodiment)

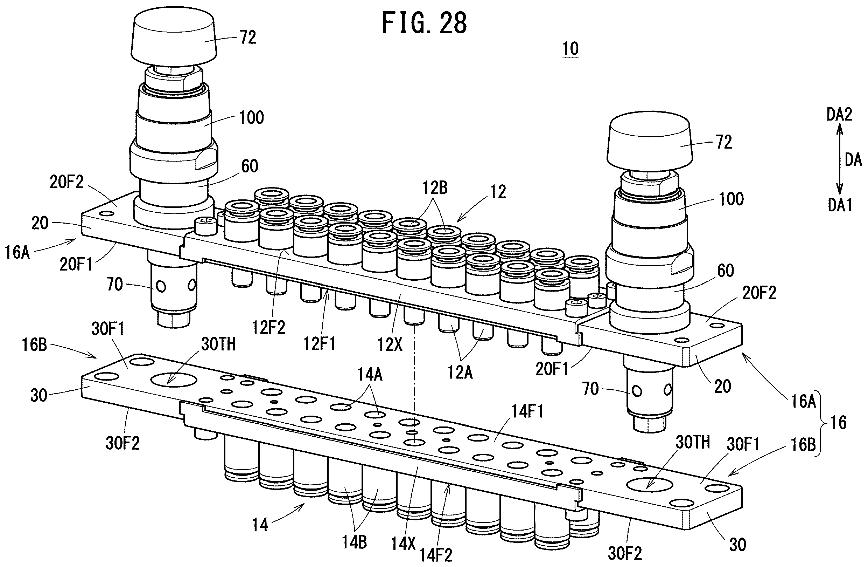

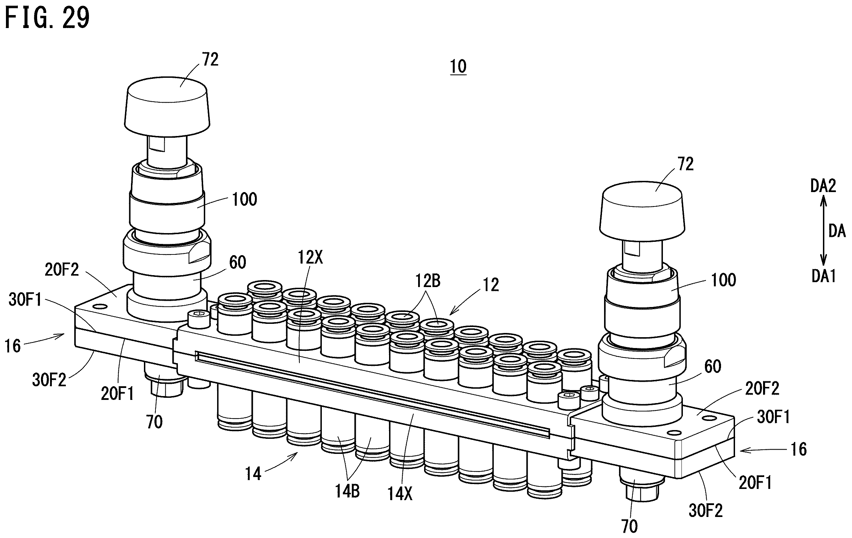

Next, a description will be given concerning the attachable and detachable structural part 16 according to a fourth embodiment. In the fourth embodiment, constituent elements that are equivalent to the above-described constituent elements are denoted by the same reference numerals. FIG. 28 is a schematic diagram showing the connection device 10 according to the fourth embodiment at a time of being disconnected. FIG. 29 is a schematic diagram showing the connection device 10 according to the fourth embodiment at a time of being connected. The connection device 10 is a device that serves to connect flow paths. The connection device 10 includes the male connector member 12, the female connector member 14, and the attachable and detachable structural part 16.

The male connector member 12 is a male connector that is capable of being attached and detached with respect to the female connector member 14. The male connector member 12 includes a plate shaped main body portion 12X, the plurality of convexly shaped flow path end parts 12A, and the plurality of tube connecting portions 12B.

Each of the plurality of convexly shaped flow path end parts 12A projects out from the first surface 12F1 of the main body portion 12X. The first surface 12F1 is a surface that faces toward the female connector member 14 at a time of being attached. The convexly shaped flow path end parts 12A may be output end parts that serve to output the fluid to the female connector member 14, or may be input end parts that serve to input the fluid supplied from the female connector member 14. In the plurality of convexly shaped flow path end parts 12A, two groups of columns are arranged in one direction, with two rows being arranged alongside one another in a direction that is perpendicular to the one direction. The group of columns may be one column or three or more columns.

Each of the plurality of tube connecting portions 12B projects out from the second surface 12F2 of the male connector member 12. The second surface 12F2 is a surface on an opposite side of the first surface 12F1 of the main body portion 12X. The plurality of tube connecting portions 12B are provided corresponding to the plurality of convexly shaped flow path end parts 12A. The tube connecting portions 12B communicate with the plurality of convexly shaped flow path end parts 12A. One end of a tube (not shown) is attached to the tube connecting portions 12B.

The female connector member 14 is a female connector that is capable of being attached and detached with respect to the male connector member 12. The female connector member 14 includes a plate shaped main body portion 14X, the plurality of concavely shaped flow path end parts 14A, and the plurality of tube connecting portions 14B.

The plurality of concavely shaped flow path end parts 14A are provided corresponding to the plurality of convexly shaped flow path end parts 12A. Each of the plurality of concavely shaped flow path end parts 14A is a hole that is formed from the main body portion 14X toward the interior of the first surface 14F1. The first surface 14F1 is a surface that faces toward the male connector member 12 at a time of being attached. When the convexly shaped flow path end parts 12A are fitted into the concavely shaped flow path end parts 14A (refer to FIG. 29), the flow passages of the concavely shaped flow path end parts 14A and the flow passages of the convexly shaped flow path end parts 12A communicate with each other. In the concavely shaped flow path end parts 14A, in a state in which the concavely shaped flow path end parts 14A and the convexly shaped flow path end parts 12A are engaged with each other, there is provided a sealing member (not shown) that serves to seal a gap between the concavely shaped flow path end parts 14A and the convexly shaped flow path end parts 12A, and thereby serves to suppress leakage of the fluid. In the plurality of concavely shaped flow path end parts 14A, two groups of columns are arranged in one direction, with two rows being arranged alongside one another in a direction that is perpendicular to the one direction. The group of columns may be one column or three or more columns.

Each of the plurality of tube connecting portions 14B projects out from the second surface 14F2 of the female connector member 14. The second surface 14F2 is a surface on an opposite side of the first surface 14F1 of the female connector member 14. The plurality of tube connecting portions 14B are provided corresponding to the plurality of concavely shaped flow path end parts 14A. The tube connecting portions 14B communicate with the plurality of concavely shaped flow path end parts 14A. One end of a tube (not shown) is attached to the tube connecting portions 14B.

The detachable structural part 16 is equipped with the first joined body 16A and the second joined body 16B. The first joined body 16A is provided on one of the male connector member 12 and the female connector member 14. The second joined body 16B is provided on another of the male connector member 12 and the female connector member 14.

According to the present embodiment, the first joined body 16A is disposed on the male connector member 12, and the second joined body 16B is disposed on the female connector member 14. Moreover, the first joined body 16A may be disposed on the female connector member 14, and the second joined body 16B may be disposed on the male connector member 12.

The first joined body 16A is provided on both end parts of the main body portion 12X in a direction (in the longitudinal direction of the main body portion 12X) in which the convexly shaped flow path end parts 12A that constitute the group of columns are arranged alongside one another. Similarly, the second joined body 16B is provided on both end parts of the main body portion 14X in a direction (in the longitudinal direction of the main body portion 14X) in which the concavely shaped flow path end parts 14A that constitute the group of columns are arranged alongside one another. According to the present embodiment, the number of the first joined bodies 16A and the second joined bodies 16B is two, although the present embodiment is not necessarily limited to this feature.

The first joined body 16A includes the first base member 20, a tubular shaped member 60, an insertion member 70, a shaft member 72, and a retaining member 100. The details of the tubular shaped member 60, the insertion member 70, the shaft member 72, and the retaining member 100 will be described later.

The first base member 20 is formed separately from the main body portion 12X, and is joined to the main body portion 12X. The first base member 20 may be formed integrally together with the main body portion 12X. The first base member 20 is shaped in the form of a plate that extends along the longitudinal direction of the main body portion 12X. The width of the first base member 20 is approximately the same as the length in the lateral direction of the main body portion 12X, although the present invention is not necessarily limited to this feature. The first base member 20 includes a first surface 20F1, and a second surface 20F2 on an opposite side of the first surface 20F1. The first surface 20F1 comes into contact with the second joined body 16B, at a time when the female connector member 14 is attached with respect to the male connector member 12 (refer to FIG. 29).

The second joined body 16B includes the second base member 30. The second base member 30 is formed integrally together with the main body portion 14X. The second base member 30 may be formed separately from the main body portion 14X, and may be joined to the main body portion 14X. The second base member 30 is shaped in the form of a plate that extends along the longitudinal direction of the main body portion 14X. The width of the second base member 30 is approximately the same as the length in the lateral direction of the main body portion 14X, although the present invention is not necessarily limited to this feature. The second base member 30 includes the first surface 30F1, and the second surface 30F2 on an opposite side of the first surface 30F1. The first surface 30F1 comes into contact with the first joined body 16A, at a time when the female connector member 14 is attached with respect to the male connector member 12 (refer to FIG. 29). A through hole 30TH, which penetrates through the second base member 30 along the direction of insertion and removal DA, is formed in the second base member 30. An opening dimension of the through hole 30TH in the direction of insertion and removal DA is constant, although the present invention is not necessarily limited to this feature.

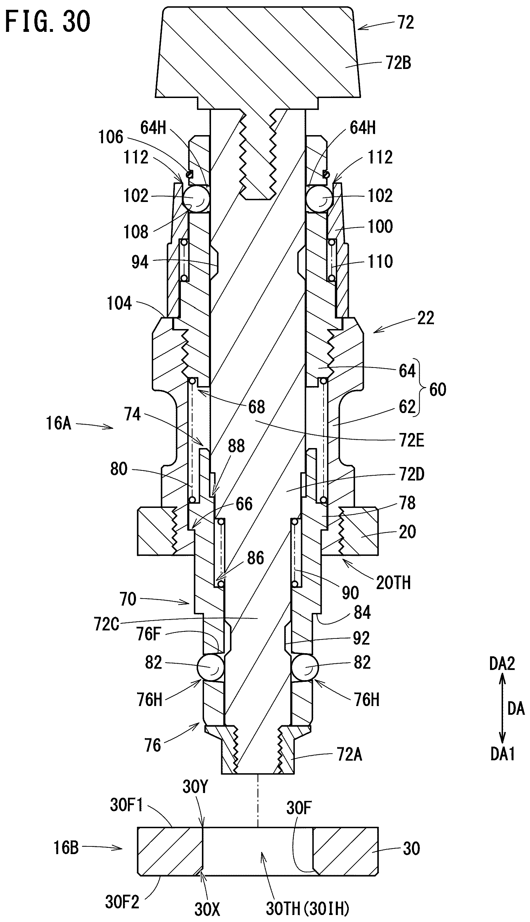

FIG. 30 is a cross-sectional view of the first joined body 16A and the second joined body 16B. By means of the through hole 30TH, a first opening edge part 30X and a second opening edge part 30Y are formed on both surfaces (the first surface 30F1 and the second surface 30F2) of the second base member 30 of the second joined body 16B. The first opening edge part 30X is formed on the second surface 30F2. The first opening edge part 30X is positioned further in the direction of insertion DA1 than the second opening edge part 30Y. The second opening edge part 30Y is formed on the first surface 30F1. The second opening edge part 30Y is positioned further in the direction of removal DA2 than the first opening edge part 30X. An inclined surface 30F may be provided on the first opening edge part 30X. The inclined surface 30F is inclined in a manner so that the opening dimension of the through hole 30TH becomes larger toward the second surface 30F2.

The tubular shaped member 60 is disposed on the first base member 20. The tubular shaped member 60 extends in the direction of removal DA2 from the first base member 20. The tubular shaped member 60 is constituted by a first tubular shaped member 62 and a second tubular shaped member 64.

The first tubular shaped member 62 is joined to a through hole 20TH that passes through the first base member 20 along the direction of insertion and removal DA. The first tubular shaped member 62 may be formed integrally together with the first base member 20. The second tubular shaped member 64 is joined to an end part of the first tubular shaped member 62 on an opposite side of the end part that is joined to the through hole 20TH. The second tubular shaped member 64 may be formed integrally together with the first tubular shaped member 62. In the second tubular shaped member 64, a plurality of hole portions 64H are formed at intervals in the circumferential direction of the second tubular shaped member 64.

A first restricting part 66 and a second restricting part 68 are provided in the tubular shaped member 60. The first restricting part 66 is a portion that restricts the movement of the insertion member 70 in the direction of insertion DA1. The first restricting part 66 is positioned inside the through hole 20TH. The first restricting part 66 is formed at an end part in the direction of insertion DA1 within the first tubular shaped member 62. The first restricting part 66 faces toward an outer peripheral portion (a restricting member 78) of the insertion member 70. The second restricting part 68 is a portion that restricts the movement of the insertion member 70 in the direction of removal DA2. The second restricting part 68 is disposed in the interior (an inner hollow portion) of the first tubular shaped member 62. The second restricting part 68 is positioned further in the direction of removal DA2 than the first restricting part 66. The second restricting part 68 is formed at an end part in the direction of insertion DA1 within the second tubular shaped member 64. The second restricting part 68 faces toward an end part in the direction of removal DA2 of the insertion member 70.

The insertion member 70 is a tubular shaped member that is inserted into the through hole 30TH of the second base member 30. A proximal end part 74 of the insertion member 70 is covered by the tubular shaped member 60. The proximal end part 74 of the insertion member 70 is supported by the tubular shaped member 60 so as to be capable of sliding along the direction of insertion and removal DA in the interior of the tubular shaped member 60.

A distal end part 76 of the insertion member 70 projects out from the interior (the hollow inner portion) of the tubular shaped member 60. A plurality of hole portions 76H are formed at intervals in the circumferential direction of the insertion member 70 in the distal end part 76 of the insertion member 70. A surface 76F surrounding each of the plurality of hole portions 76H is inclined from the inner peripheral surface toward the outer peripheral surface of the insertion member 70 in a manner so that the opening dimension of the hole portions 76H becomes smaller.

The restricting member 78 is disposed on the insertion member 70. The restricting member 78 is formed on the outer peripheral surface of the proximal end part 74. The restricting member 78 is positioned between the first restricting part 66 and the second restricting part 68. The restricting member 78 corresponds to the aforementioned first stepped portion 22X. A first biasing member 80 is disposed between the restricting member 78 and the second restricting part 68. The first biasing member 80 biases the tubular shaped member 60 in the direction of removal DA2 with respect to the insertion member 70. The first biasing member 80 is a coil spring, although the present invention is not necessarily limited to this feature.

A first locking member 82 is provided on the insertion member 70. The first locking member 82 is disposed on each of the plurality of hole portions 76H. The first locking member 82 may be spherically shaped. A part of the first locking member 82 is capable of projecting out from the outer peripheral surface of the insertion member 70.

An abutting portion 84 is provided on the insertion member 70. The abutting portion 84 is formed on the outer peripheral surface of the distal end part 76. The abutting portion 84 is a stepped portion of the outer peripheral surface that is formed by a difference in the outer diameter of the insertion member 70. The abutting portion 84 is positioned more in the direction of removal DA2 than the hole portions 76H. The abutting portion 84 is disposed between the hole portions 76H and the restricting member 78. The abutting portion 84 abuts against the second opening edge part 30Y.

A first shaft restricting part 86 and a second shaft restricting part 88 are formed on an inner peripheral surface of the insertion member 70. The first shaft restricting part 86 and the second shaft restricting part 88 are portions that restrict the movement of the shaft member 72 in the direction of insertion DA1. The first shaft restricting part 86 and the second shaft restricting part 88 are stepped portions of the inner peripheral surface that are formed by a difference in the inner diameter of the insertion member 70. The first shaft restricting part 86 is positioned further in the direction of insertion DA1 than the second shaft restricting part 88. The first shaft restricting part 86 is positioned more on an inner side than the second shaft restricting part 88.

The shaft member 72 passes through the tubular shaped member 60 and the insertion member 70. Stated otherwise, the shaft member 72 is inserted through the interior of the tubular shaped member 60 and the interior of the insertion member 70 which is of a tubular shape. The shaft member 72 is supported by the insertion member 70 so as to be capable of sliding along the direction of insertion and removal DA. The shaft member 72 includes a first end part 72A, a second end part 72B, a first intermediate part 72C, a second intermediate part 72D, and a third intermediate part 72E.

The first end part 72A is an end part of the shaft member 72 in the direction of insertion DA1. The first end part 72A projects out from the insertion member 70. The first end part 72A is formed so as to be capable of abutting against an end surface in the direction of insertion DA1 of the insertion member 70. Removal of the shaft member 72 in the direction of removal DA2 is suppressed by the first end part 72A. The second end part 72B is an end part of the shaft member 72 in the direction of removal DA2. The second end part 72B is used as an operating portion in order to perform a pressing operation in the direction of insertion DA1. The second end part 72B is formed so as to be capable of abutting against an end surface in the direction of removal DA2 of the tubular shaped member 60. The pressure applied to the shaft member 72 in the insertion direction DA1 is restricted by the second end part 72B.

The first intermediate part 72C is positioned between the first end part 72A and the second intermediate part 72D. The first intermediate part 72C is formed, for example, in a cylindrical columnar shape. The second intermediate part 72D is positioned between the first intermediate part 72C and the third intermediate part 72E. The second intermediate part 72D is formed, for example, in a cylindrical columnar shape. The third intermediate part 72E is positioned between the second intermediate part 72D and the second end part 72B. The third intermediate part 72E is formed, for example, in a cylindrical columnar shape. The diameter of the third intermediate part 72E is larger than the diameter of the second intermediate part 72D. The diameter of the second intermediate part 72D is larger than the diameter of the first intermediate part 72C.

Although the first intermediate part 72C, the second intermediate part 72D, and the third intermediate part 72E are formed together integrally, they may be separate bodies. The first end part 72A is separate from the first intermediate part 72C, however, it may be integral therewith. The second end part 72B is separate from the third intermediate part 72E, however, it may be integral therewith.

The shaft member 72 is biased by a second biasing member 90 in the direction of removal DA2 with respect to the tubular shaped member 60. The second biasing member 90 is disposed between the first shaft restricting part 86 and the second intermediate part 72D. The second biasing member 90 biases the shaft member 72 in the direction of removal DA2 with respect to the insertion member 70. The second biasing member 90 is a coil spring, although the present invention is not necessarily limited to this feature.

A first concave part 92 and a second concave part 94 are formed on the outer peripheral surface of the shaft member 72. The first concave part 92 is formed in the first intermediate part 72C. The second concave part 94 is formed in the third intermediate part 72E. The second concave part 94 is positioned further in the direction of removal DA2 than the first concave part 92. The second concave part 94 corresponds to the aforementioned second stepped portion 22Y.

The retaining member 100 is formed in a tubular shape. The retaining member 100 is inserted through the second tubular shaped member 64 of the tubular shaped member 60. The retaining member 100 covers and retains a second locking member 102 in a manner so that the second locking member 102 does not fall off on an outer side of the tubular shaped member 60. The second locking member 102 is disposed on each of the plurality of hole portions 64H. The second locking member 102 may be spherically shaped. The retaining member 100 covers the second concave part 94 via the tubular shaped member 60.

The retaining member 100 is capable of sliding in the direction of insertion and removal DA along the second tubular shaped member 64. The sliding of the retaining member 100 in the direction of insertion DA1 is restricted by an insertion side restricting part 104. On the other hand, the sliding of the retaining member 100 in the direction of removal DA2 is restricted by a removal side restricting part 106.

The insertion side restricting part 104 is disposed on an outer peripheral surface of the tubular shaped member 60. The insertion side restricting part 104 is a stepped portion of the outer peripheral surface that is formed by a difference in the outer diameter of the tubular shaped member 60. The insertion side restricting part 104 is positioned further in the direction of insertion DA1 than the hole portions 64H. The insertion side restricting part 104 is disposed between the hole portions 64H and the second restricting part 68. An end part in the direction of insertion DA1 of the retaining member 100 abuts against the insertion side restricting part 104.

The removal side restricting part 106 is disposed on an outer peripheral surface of the tubular shaped member 60. The removal side restricting part 106 may be a ring member that is fitted into the tubular shaped member 60. The removal side restricting part 106 is positioned further in the direction of removal DA2 than the hole portions 64H. The removal side restricting part 106 is positioned more on an inner side than the insertion side restricting part 104. The removal side restricting part 106 is disposed between the hole portions 64H and an end part in the direction of removal DA2 of the tubular shaped member 60. A locking part 108, which is formed on an inner peripheral surface of the retaining member 100, abuts against the removal side restricting part 106. The locking part 108 is a stepped portion of the inner peripheral surface that is formed by a difference in the inner diameter of the second tubular shaped member 64.

The retaining member 100 is biased by a third biasing member 110 in the direction of removal DA2 with respect to the tubular shaped member 60. The third biasing member 110 is disposed between the retaining member 100 and the tubular shaped member 60. The third biasing member 110 biases the retaining member 100 in the direction of removal DA2 with respect to the tubular shaped member 60. The third biasing member 110 is a coil spring, although the present invention is not necessarily limited to this feature.

A notch 112 is formed on an inner peripheral surface in the direction of removal DA2 of the retaining member 100. The notch 112 extends from an end part in the direction of removal DA2 toward the direction of insertion DA1 of the retaining member 100. The locking part 108, which is formed on the inner peripheral surface of the retaining member 100, is positioned at an end part in the direction of insertion DA1 of the notch 112.

Next, a description will be given concerning the operation of the first joined body 16A when the extending member 22 is inserted into the through hole 30TH.

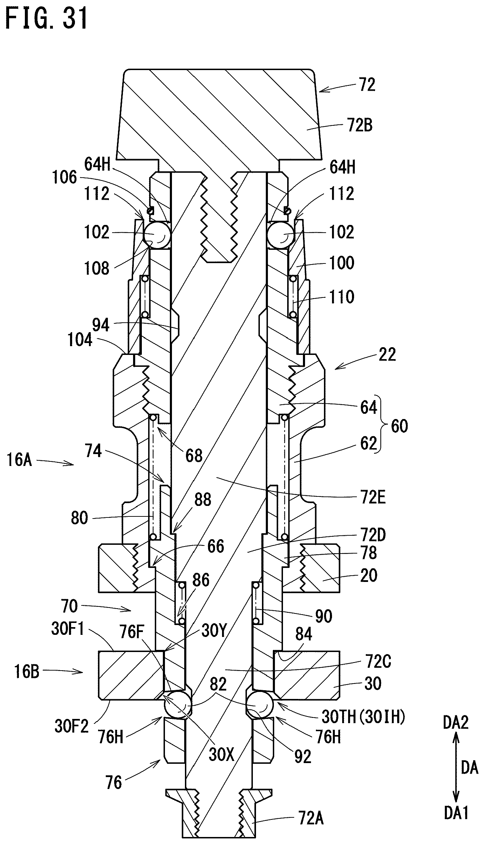

At first, the user pushes the shaft member 72 in the direction of insertion DA1. When the second end part 72B of the shaft member 72 abuts against the tubular shaped member 60, the first concave part 92 of the shaft member 72 faces toward the first locking member 82. In accordance therewith, the first locking member 82 is capable of being retracted inside the first concave part 92. In this state, as shown in FIG. 31, from the first surface 30F1 toward the second surface 30F2 of the second base member 30, the user inserts the distal end part 76 of the insertion member 70 into the through hole 30TH. When the abutting portion 84 abuts against the first surface 30F1 of the second base member 30, the insertion of the insertion member 70 is completed. In FIG. 31, a state is shown in which the first locking member 82 is retracted inside the first concave part 92.

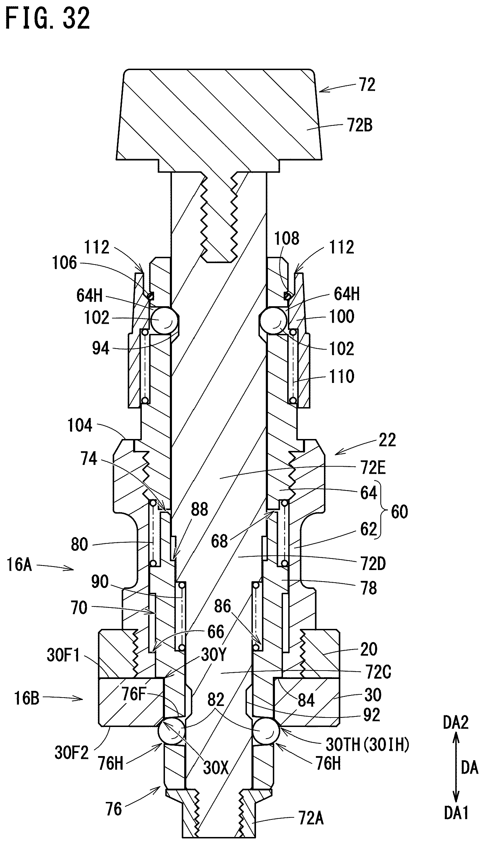

Thereafter, as shown in FIG. 32, the user pushes the first base member 20 in the direction of insertion DA1. Along therewith, the tubular shaped member 60 that is disposed on the first base member 20 also moves in the direction of insertion DA1. In accordance with this movement, the tubular shaped member 60 is biased in the direction of removal DA2 by the first biasing member 80. When the first base member 20 abuts against the first surface 30F1 of the second base member 30, the concavely shaped flow path end parts 14A (see FIG. 28) and the convexly shaped flow path end parts 12A (see FIG. 28) are fitted together.

After the first base member 20 has been placed in contact with the first surface 30F1 of the second base member 30, the user releases the pushing of the shaft member 72 in the direction of insertion DA1. When the pushing in of the shaft member 72 is released, the shaft member 72 is moved in the direction of removal DA2 by the second biasing member 90. Accompanying such movement, the first concave part 92 also moves in the direction of removal DA2. In accordance therewith, the first locking member 82 is pushed by the shaft member 72, and a part of the first locking member 82 projects out from the outer peripheral surface of the shaft member 72. As a result, the first locking member 82 is locked onto the first opening edge part 30X of the second base member 30. Since the first locking member 82 is locked onto the first opening edge part 30X even without any operation being made by the user after the pressure on the shaft member 72 is released, this is user friendly.

In a state in which the first locking member 82 is locked onto the first opening edge part 30X, even if a force that acts to pull out the insertion member 70 is generated, the pulling out of the insertion member 70 from the through hole 30TH is suppressed. Accordingly, even if the pressure of the fluid flowing between the convexly shaped flow path end parts 12A (see FIG. 28) and the concavely shaped flow path end parts 14A (see FIG. 28) is large, the engaged state between the convexly shaped flow path end parts 12A and the concavely shaped flow path end parts 14A is maintained. As a result, it is possible to avoid a situation in which the engaged state of the male connector member 12 and the female connector member 14 is unintentionally released, and safety can be ensured.

In a state in which the first locking member 82 is locked onto the first opening edge part 30X, the second concave part 94 of the shaft member 72 faces toward the second locking member 102. In accordance therewith, the second locking member 102 is capable of being retracted inside the second concave part 94. When the second locking member 102 becomes capable of being retracted into the second concave part 94, the retaining member 100 is moved in the direction of removal DA2 by the third biasing member 110. Accompanying this movement, the second locking member 102 is pushed by the retaining member 100, and a part of the second locking member 102 enters into the second concave part 94. In accordance therewith, the second locking member 102 is locked onto the shaft member 72. Since the second locking member 102 is locked onto the shaft member 72 even without any operation being made by the user after the pressure on the shaft member 72 is released, this is user friendly.

In a state in which the second locking member 102 is locked onto the shaft member 72, even if pressed, the shaft member 72 does not move in the direction of insertion DA1. Therefore, the locking of the first locking member 82 with respect to the first opening edge part 30X is not released. Accordingly, the attached state between the male connector member 12 and the female connector member 14 is maintained.

Next, a description will be given concerning the operation of the first joined body 16A when the extending member 22 is removed from the through hole 30TH.

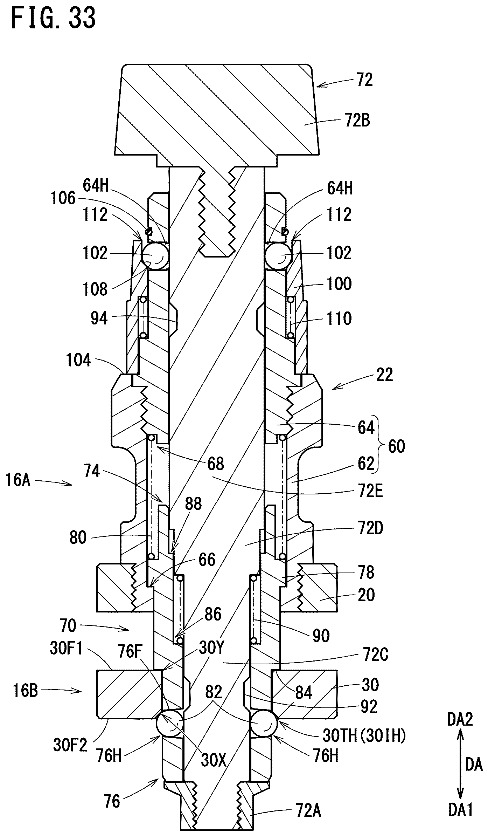

When the user slides the retaining member 100 in the direction of insertion DA1 from the state shown in FIG. 32, the state shown in FIG. 33 is brought about. More specifically, accompanying the sliding of the retaining member 100, the notch 112 of the retaining member 100 faces toward the second locking member 102. In accordance therewith, the second locking member 102 is capable of being retracted inside the notch 112. When the second locking member 102 is capable of being retracted inside the notch 112, the tubular shaped member 60 is biased in the direction of removal DA2 by the first biasing member 80. Along therewith, the tubular shaped member 60, and the first base member 20 on which the tubular shaped member 60 is disposed move in the direction of removal DA2. In accordance with this feature, the first joined body 16A separates away from the second joined body 16B, and the engaged state between the convexly shaped flow path end parts 12A (see FIG. 28) and the concavely shaped flow path end parts 14A (see FIG. 28) is released.

Even if the tubular shaped member 60 and the first base member 20 move in the direction of removal DA2, the locking of the first locking member 82 with respect to the first opening edge part 30X of the second base member 30 is maintained. Therefore, the insertion member 70 is fixed to the second joined body 16B.

At the moment when the engaged state between the convexly shaped flow path end parts 12A (see FIG. 28) and the concavely shaped flow path end parts 14A (see FIG. 28) is released, a case may occur in which a large force acts in the direction of removal DA2. For example, one cause of this is the pressure difference between the interior and the exterior of the flow path that communicates with the convexly shaped flow path end parts 12A and the concavely shaped flow path end parts 14A. In this case, by the restricting member 78 of the insertion member 70 that is fixed to the second joined body 16B locking the first restricting part 66 of the tubular shaped member 60, the movement of the first joined body 16A in the direction of removal DA2 with respect to the second joined body 16B is restricted. Accordingly, it is possible to avoid a situation in which the first joined body 16A and the second joined body 16B are suddenly separated away from each other.

Even if the tubular shaped member 60 moves in the direction of removal DA2, the shaft member 72 that is inserted into the insertion member 70 remains stationary. Therefore, in accordance with the movement of the tubular shaped member 60 in the direction of removal DA2, the second locking member 102 is pushed out from the second concave part 94, and moves inside the notch 112. In accordance therewith, the locking of the shaft member 72 by the second locking member 102 is released, and the shaft member 72 becomes capable of being pushed in the direction of insertion DA1. Since the locking of the shaft member 72 by the second locking member 102 is released even without any operation being made by the user after the retaining member 100 is slid in the direction of insertion DA1, this is user friendly.

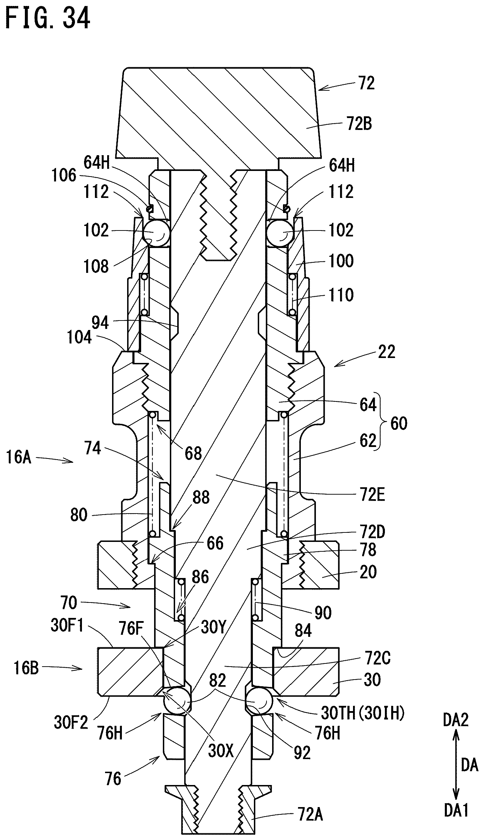

Thereafter, as shown in FIG. 34, the user pushes the shaft member 72 in the direction of insertion DA1. When the second end part 72B of the shaft member 72 abuts against the tubular shaped member 60, the first concave part 92 of the shaft member 72 faces toward the first locking member 82. In accordance therewith, the first locking member 82 is capable of being retracted inside the first concave part 92. Accordingly, the user can remove the insertion member 70 from the through hole 30TH, and can separate the first joined body 16A and the second joined body 16B, and as a result, can separate the male connector member 12 away from the female connector member 14. In this manner, the release of the connection between the male connector member 12 and the female connector member 14 can be safely carried out.

In relation to the above-described disclosure, the following supplementary notes are further disclosed.

### (Supplementary Note 1)

The present disclosure is characterized by the connection device (10) that connects the flow paths, comprising the male connector member (12) having the plurality of convexly shaped flow path end parts (12A), the female connector member (14) having the concavely shaped flow path end parts (14A) that are disposed to be capable of fitting one-to-one with the plurality of convexly shaped flow path end parts, the first joined body (16A) disposed on one of the male connector member and the female connector member, and the second joined body (16B) disposed on the other of the male connector member and the female connector member, wherein the through hole (30TH) is formed in the second joined body to penetrate through the second joined body along the direction of insertion and removal (DA) in which the convexly shaped flow path end parts and the concavely shaped flow path end parts are inserted and removed, and the first joined body comprises the insertion member (70) the distal end part (76) of which is inserted into the through hole, in a fitted state in which the convexly shaped flow path end parts and the concavely shaped flow path end parts are fitted together, the base member (20), the tubular shaped member (60) disposed on the base member, and that extends in the direction of removal (DA2) opposite to the direction of insertion (DA1) in which the insertion member is inserted into the through hole, that covers the outer periphery of the proximal end part (74) of the insertion member, and that supports the insertion member, the first biasing member (80) that biases the insertion member in the direction of removal with respect to the tubular shaped member, the first locking member (82) disposed on the insertion member, and which, in the fitted state, locks with the first opening edge part (30X) positioned in the direction of insertion from among the opening edge parts that are defined by the through hole on both sides of the second joined body, thereby restricting the movement of the first joined body in the direction of removal with respect to the second joined body, and the restricting member (78) positioned more in the direction of removal than the first locking member within the insertion member, and that restricts the movement of the first joined body in the direction of removal with respect to the second joined body.

### (Supplementary Note 2)

In the connection device according to Supplementary Note 1, there may further be provided the shaft member (72) that penetrates in the direction of insertion through the insertion member and the tubular shaped member, the second biasing member (90) that serves to bias the shaft member in the direction of removal with respect to the insertion member, and the first concave part (92) formed on the outer peripheral surface that is positioned more in the direction of removal than the first locking member within the shaft member in the fitted state, and that allows the first locking member to retract.

### (Supplementary Note 3)

In the connection device according to Supplementary Note 2, there may further be provided the second locking member (102) disposed in the tubular shaped member, and that serves to lock the sliding of the shaft member in the direction of insertion and removal, and the tubular shaped retaining member (100) that is inserted into an end of the tubular shaped member in the direction of removal, and that serves to retain the second locking member.

### (Supplementary Note 4)

In the connection device according to Supplementary Note 3, there may further be provided the second concave part (94) formed on the outer peripheral surface of the shaft member and that is covered by the retaining member, wherein the second locking member may engage with the second concave part to thereby lock the sliding of the shaft member in the direction of insertion and removal.

### (Supplementary Note 5)

In the connection device according to Supplementary Note 4, there may further be provided the third biasing member (110) that serves to bias the retaining member in the direction of removal with respect to the tubular shaped member, wherein the retaining member may be configured to retain, in a state of not being operated in the direction of insertion, the second locking member with respect to the second concave part, and the retaining member provided with a notch (112) formed in the retaining member may be configured to cause, in a state of being operated in the direction of insertion, the second locking member to move toward the outer side.

### (Supplementary Note 6)

In the connection device according to Supplementary Note 1, the insertion member, in the fitted state, may include the abutting portion (84) that abuts against the second opening edge part (30Y) that is positioned in the direction of removal from among the opening edge parts that are defined by the through hole on both sides of the second joined body, and that serves to restrict the movement of the insertion member in the direction of insertion with respect to the second joined body.

### (Supplementary Note 7)

The present disclosure is characterized by the connection device (10) that connects the flow paths, comprising the male connector member (12) having the plurality of convexly shaped flow path end parts (12A), the female connector member (14) having the concavely shaped flow path end parts (14A) that are disposed to be capable of fitting one-to-one with the plurality of convexly shaped flow path end parts, the first joined body (16A) disposed on one of the male connector member and the female connector member, and the second joined body (16B) disposed on the other of the male connector member and the female connector member, wherein the first joined body comprises the first base member (20), and the extending member (22) that extends from the first base member along the direction of insertion and removal (DA) in which the convexly shaped flow path end parts and the concavely shaped flow path end parts are inserted and removed, and that is inserted into the insertion hole (30IH) that is formed in the second joined body, the outer peripheral surface of the extending member includes the first stepped portion (22X), and the second stepped portion (22Y) positioned between the first stepped portion and the proximal end of the extending member and more on an inner side than the first stepped portion, the second stepped portion, in a fitted state in which the convexly shaped flow path end parts and the concavely shaped flow path end parts are fitted together, engages with the second joined body in order to prevent the extending member that is inserted into the insertion hole from coming out from the insertion hole, and the first stepped portion engages with the second joined body in order to prevent the extending member from coming out from the insertion hole after the engagement with the second stepped portion is released.

### (Supplementary Note 8)

In the connection device according to Supplementary Note 7, the second joined body may comprise the stopper member (32) which engages, in the fitted state, with the second stepped portion, and which engages with the first stepped portion after the engagement with the second stepped portion is released, and the stopper biasing member (34) that serves to bias the stopper member toward the outer peripheral surface of the extending member, and causes the stopper member to engage with the first stepped portion and the second stepped portion.

### (Supplementary Note 9)

In the connection device according to Supplementary Note 8, the second joined body may comprise the operating member (36) that operates the stopper member in an opposite direction opposite to the direction in which the stopper biasing member applies a biasing force, and thereby serves to release the engagement with the stopper member.

### (Supplementary Note 10)

In the connection device according to Supplementary Note 9, in order to cause the stopper member to move in the opposite direction by the extending member being inserted into the insertion hole, the inclined surface (22SL) may be formed on the distal end part (22D) of the extending member.

### (Supplementary Note 11)

In the connection device according to any one of Supplementary Notes 7 to 10, the first joined body may include the base biasing member (24) that serves to bias the first base member in the direction in which the extending member is removed from the insertion hole.

### (Supplementary Note 12)

In the connection device according to Supplementary Note 7, the insertion hole may be formed in a manner so as to enable the extending member to be capable of sliding in a direction that intersects the direction of insertion and removal, and the insertion hole may include the first hole portion (HP1) through which the first stepped portion and the second stepped portion are capable of passing, the second hole portion (HP2) through which the first stepped portion and the second stepped portion are incapable of passing, and the third hole portion (HP3) that is connected to the first hole portion and the second hole portion, through which the second stepped portion is capable of passing, and through which the first stepped portion is incapable of passing, and the second joined body may include the first stopper member (40) which, in the case that the portion of the extending member between the second stepped portion and the proximal end is positioned in the second hole portion, may serve to engage with the second stepped portion, and the second stopper member (42) which, in the case that the portion of the extending member between the first stepped portion and the second stepped portion is positioned in the third hole portion, may serve to engage with the first stepped portion.

### (Supplementary Note 13)

In the connection device according to Supplementary Note 12, the second joined body may include the first surface (30F1) that faces toward the first joined body at a time when the extending member is inserted into the insertion hole, and the second surface (30F2) on the opposite side from the first surface, the first stopper member may be the peripheral edge portion of the insertion hole in the second surface, and the second stopper member may be the protruding portion that projects out from the second joined body into the third hole portion.

### (Supplementary Note 14)

In the connection device according to Supplementary Note 13, there may further be provided the extending biasing member (26) that is disposed between the first base member and the extending member, and which serves to bias the extending member in the direction that intersects the direction of insertion and removal.

### (Supplementary Note 15)

The present disclosure is characterized by the connection device (10) that connects the flow paths, comprising the male connector member (12) having the plurality of convexly shaped flow path end parts (12A), the female connector member (14) having the concavely shaped flow path end parts (14A) that are disposed to be capable of fitting one-to-one with the plurality of convexly shaped flow path end parts, the first joined body (16A) disposed on one of the male connector member and the female connector member, and the second joined body (16B) disposed on the other of the male connector member and the female connector member, wherein the first joined body comprises the first base member (20), and the extending member (22) that extends from the first base member along the direction of insertion and removal (DA) in which the convexly shaped flow path end parts and the concavely shaped flow path end parts are inserted and removed, and on which the stepped portion (22X) is formed on the outer peripheral surface thereof, and the second joined body comprises the second base member (30) which is a hollow box body, the first stopper member (52) that is supported on the second base member so as to be capable of sliding in an interior of the hollow, the stopper biasing member (34) that serves to bias the first stopper member toward the outer peripheral surface of the extending member that is inserted into the hollow, the second stopper member (54) that prevents the removal of the extending member after the engagement between the first stopper member and the stepped portion has been released, on the second base member, there are formed the first inlet portion (E1) through which the stepped portion is capable of passing, and the second inlet portion (E2) that communicates with the first inlet portion, and through which the stepped portion is incapable of passing, the first stopper member engages with the stepped portion of the extending member that is disposed in the second inlet portion, and thereby prevents the extending member that is inserted into the hollow from being removed, and the second stopper member is a peripheral edge portion of the second inlet portion in the second base member.

Moreover, the present invention is not limited to the above-described disclosure, and various configurations can be adopted therein without departing from the essence and gist of the present invention.

## Claims

1. A connection device (10) configured to connect flow paths, comprising:
a male connector member (12) having a plurality of convexly shaped flow path end parts (12A);
a female connector member (14) having concavely shaped flow path end parts (14A) that are disposed to be capable of fitting one-to-one with the plurality of convexly shaped flow path end parts;
a first joined body (16A) disposed on one of the male connector member and the female connector member; and
a second joined body (16B) disposed on another of the male connector member and the female connector member;
wherein a through hole (30TH) is formed in the second joined body to penetrate through the second joined body along a direction of insertion and removal (DA) in which the convexly shaped flow path end parts and the concavely shaped flow path end parts are inserted and removed; and
the first joined body comprises:
an insertion member (70) a distal end part (76) of which is inserted into the through hole, in a fitted state in which the convexly shaped flow path end parts and the concavely shaped flow path end parts are fitted together;
a base member (20);
a tubular shaped member (60) disposed on the base member, and configured to extend in a direction of removal (DA2) opposite to a direction of insertion (DA1) in which the insertion member is inserted into the through hole, to cover an outer periphery of a proximal end part (74) of the insertion member, and to support the insertion member;
a first biasing member (80) configured to bias the insertion member in the direction of removal with respect to the tubular shaped member;
a first locking member (82) disposed on the insertion member, and which, in the fitted state, is configured to lock with a first opening edge part (30X) positioned in the direction of insertion from among opening edge parts that are defined by the through hole on both sides of the second joined body , thereby restricting movement of the first joined body in the direction of removal with respect to the second joined body; and
a restricting member (78) positioned more in the direction of removal than the first locking member within the insertion member, and configured to restrict movement of the first joined body in the direction of removal with respect to the second joined body.

2. The connection device according to claim 1, further comprising:
a shaft member (72) configured to penetrate in the direction of insertion through the insertion member and the tubular shaped member;
a second biasing member (90) configured to bias the shaft member in the direction of removal with respect to the insertion member; and
a first concave part (92) formed on an outer peripheral surface that is positioned more in the direction of removal than the first locking member within the shaft member in the fitted state, and configured to allow the first locking member to retract.

3. The connection device according to claim 2, further comprising:
a second locking member (102) disposed in the tubular shaped member, and configured to lock sliding of the shaft member in the direction of insertion and removal;
a tubular shaped retaining member (100) that is inserted into an end of the tubular shaped member in the direction of removal, and configured to retain the second locking member.

4. The connection device according to claim 3, further comprising:
a second concave part (94) formed on the outer peripheral surface of the shaft member and covered by the retaining member;
wherein the second locking member is configured to engage with the second concave part to thereby lock the sliding of the shaft member in the direction of insertion and removal.

5. The connection device according to claim 4, further comprising:
a third biasing member (110) configured to bias the retaining member in the direction of removal with respect to the tubular shaped member;
wherein the retaining member is configured to retain, in a state of not being operated in the direction of insertion, the second locking member with respect to the second concave part; and
the retaining member provided with a notch (112) formed in the retaining member is configured to cause, in a state of being operated in the direction of insertion, the second locking member to move toward an outer side.

6. The connection device according to claim 1, wherein the insertion member, in the fitted state, comprises an abutting portion (84) configured to abut against a second opening edge part (30Y) positioned in the direction of removal from among the opening edge parts that are defined by the through hole on both sides of the second joined body, and to restrict movement of the insertion member in the direction of insertion with respect to the second joined body.

7. A connection device (10) configured to connect flow paths, comprising:
a male connector member (12) having a plurality of convexly shaped flow path end parts (12A);
a female connector member (14) having concavely shaped flow path end parts (14A) that are disposed to be capable of fitting one-to-one with the plurality of convexly shaped flow path end parts;
a first joined body (16A) disposed on one of the male connector member and the female connector member; and
a second joined body (16B) disposed on another of the male connector member and the female connector member;
wherein:
the first joined body comprises:
a first base member (20); and
an extending member (22) configured to extend from the first base member along a direction of insertion and removal (DA) in which the convexly shaped flow path end parts and the concavely shaped flow path end parts are inserted and removed, and to be inserted into an insertion hole (30IH) that is formed in the second joined body;
an outer peripheral surface of the extending member includes a first stepped portion (22X), and a second stepped portion (22Y) positioned between the first stepped portion and a proximal end of the extending member and more on an inner side than the first stepped portion;
the second stepped portion, in a fitted state in which the convexly shaped flow path end parts and the concavely shaped flow path end parts are fitted together, engages with the second joined body in order to prevent the extending member that is inserted into the insertion hole from coming out from the insertion hole; and
the first stepped portion engages with the second joined body in order to prevent the extending member from coming out from the insertion hole after the engagement with the second stepped portion is released.

8. The connection device according to claim 7, wherein:
the second joined body comprises:
a stopper member (32) configured to engage, in the fitted state, with the second stepped portion, and to engage with the first stepped portion after the engagement with the second stepped portion is released; and
a stopper biasing member (34) configured to bias the stopper member toward the outer peripheral surface of the extending member, and to cause the stopper member to engage with the first stepped portion and the second stepped portion.

9. The connection device according to claim 8, wherein the second joined body comprises an operating member (36) configured to operate the stopper member in an opposite direction opposite to the direction in which the stopper biasing member applies a biasing force, and to thereby release the engagement with the stopper member.

10. The connection device according to claim 9, wherein in order to cause the stopper member to move in the opposite direction by the extending member being inserted into the insertion hole, an inclined surface (22SL) is formed on a distal end part (22D) of the extending member.

11. The connection device according to any one of claims 7 to 10, wherein the first joined body comprises a base biasing member (24) configured to bias the first base member in a direction in which the extending member is removed from the insertion hole.

12. The connection device according to claim 7, wherein:
the insertion hole is formed in a manner so as to enable the extending member to be capable of sliding in a direction that intersects the direction of insertion and removal;
the insertion hole comprises:
a first hole portion (HP1) through which the first stepped portion and the second stepped portion are capable of passing;
a second hole portion (HP2) through which the first stepped portion and the second stepped portion are incapable of passing; and
a third hole portion (HP3) that is connected to the first hole portion and the second hole portion, through which the second stepped portion is capable of passing, and through which the first stepped portion is incapable of passing; and
the second joined body comprises:
a first stopper member (40) which, in a case that a portion of the extending member between the second stepped portion and the proximal end is positioned in the second hole portion, is configured to engage with the second stepped portion;
a second stopper member (42) which, in a case that a portion of the extending member between the first stepped portion and the second stepped portion is positioned in the third hole portion, is configured to engage with the first stepped portion.

13. The connection device according to claim 12, wherein:
the second joined body comprises a first surface (30F1) configured to face toward the first joined body at a time when the extending member is inserted into the insertion hole, and a second surface (30F2) on an opposite side from the first surface;
the first stopper member is a peripheral edge portion of the insertion hole in the second surface; and
the second stopper member is a protruding portion that projects out from the second joined body into the third hole portion.

14. The connection device according to claim 13, further comprising an extending biasing member (26) disposed between the first base member and the extending member, and configured to bias the extending member in a direction that intersects the direction of insertion and removal.
